(19)

**Europäisches Patentamt**
**European Patent Office**
**Office européen des brevets**

(11) **EP 4 787 746 A1**

(12) **EUROPEAN PATENT APPLICATION**
published in accordance with Art. 153(4) EPC

(43) Date of publication:
05.08.2026   Bulletin 2026/32

(21) Application number: 24872962.6

(22) Date of filing: 26.09.2024

(51) International Patent Classification (IPC):
*H04L 1/00* (2006.01)

(52) Cooperative Patent Classification (CPC):
H04L 1/00

(86) International application number:
PCT/KR2024/014591

(87) International publication number:
WO 2025/071254 (03.04.2025 Gazette 2025/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority:   27.09.2023   KR 20230130937

(71) Applicant: LG Electronics Inc.
Yeongdeungpo-gu
Seoul 07336 (KR)

(72) Inventors:
• YOU, Hyangsun
Seoul 06772 (KR)

• KIM, Kijun
Seoul 06772 (KR)
• KO, Hyunsoo
Seoul 06772 (KR)
• SHIM, Jaenam
Seoul 06772 (KR)
• KIM, Seonwook
Seoul 06772 (KR)

(74) Representative: Frenkel, Matthias Alexander
Wuesthoff & Wuesthoff
Patentanwälte und Rechtsanwalt PartG mbB
Schweigerstraße 2
81541 München (DE)

(54) **METHOD FOR OPERATING DEVICE IN WIRELESS COMMUNICATION SYSTEM AND DEVICE USING SAME METHOD**

(57)   Provided are a method for operating a device in a wireless communication system and a device using the method. The method comprises: receiving modulation and coding scheme (MCS) information indicating an MCS index; determining a modulation order applied to a specific resource on the basis of the MCS information; and transmitting a data channel by applying the determined modulation order, wherein, when the specific resource is a half duplex (HD) resource, a first modulation order is determined as a modulation order applied to the HD resource, when the specific resource is a full duplex (FD) resource, a second modulation order is determined as a modulation order for the FD resource, and the first modulation order and the second modulation order are different from each other.

FIG. 20

receiving MCS (modulation and coding scheme) information indicating an MCS index ⎯ S201

determining a modulation order applied to a specific resource based on the MCS information, and wherein, based on the specific resource being an HD (half duplex) resource, a first modulation order is determined as a modulation order applied to the HD resource, and wherein, based on the specific resource being an FD (full duplex) resource, a second modulation order is determined as a modulation order for the FD resource, and wherein the first modulation order and the second modulation order are different from each other ⎯ S202

transmitting the data channel by applying the determined modulation order ⎯ S203

## Description

### TECHNICAL FIELD

This disclosure relates to a method of operating a device in a wireless communication system and a device using the method.

### BACKGROUND ART

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new radio access technology (new RAT or NR) in the present disclosure for convenience.

In NR or post-NR wireless communication systems, full duplex (FD) operation can be performed. When performing FD operation, the device can perform downlink reception and uplink transmission simultaneously in a specific time resource. Half duplex (HD) operation differs in that only one of downlink reception and uplink transmission can be performed in a given time resource.

For FD operation, i) some frequency resources in the same time resource can be allocated as downlink subbands and other some frequency resources as uplink subbands (this may be referred to as subband FD, or SBFD (subband-wise full duplex)), or ii) frequency resources that can be used for both downlink reception and uplink transmission in the same time resource can be allocated (this may be referred to as spectrum shared FD, or SSFD (spectrum-sharing full duplex)).

Meanwhile, when transmitting a transport block (TB) through a data channel, it is necessary to determine a modulation order, a target code rate, a redundancy version, a transport block size (TBS), and the like for the data channel. For example, when channel quality of the data channel is good, a relatively high modulation order may be used, and when the channel quality of the data channel is not good, a relatively low modulation order may be used.

However, the transport block may be transmitted across resources operating in half duplex (HD) (hereinafter, HD resources) and resources operating in full duplex (FD) (hereinafter, FD resources). In this case, channel quality may be different depending on the resources through which the transport block is transmitted. For example, in the case of FD resources, channel quality may be worse than that of HD resources due to influences of cross link interference (CLI) and self interference (SI).

In the current standard specification, the same modulation and coding scheme (MCS) is applied to all resources for transmitting a transport block. That is, the same modulation order and the same target code rate are applied to all resources for transmitting the transport block. In this case, it is difficult to apply an optimal MCS tailored to channel quality that differs for each resource.

In addition, the TBS is determined based on the modulation order and the target code rate. Thus, when the transport block is transmitted across HD resources and FD resources, there is a need to clarify how to determine the TBS.

### DISCLOSURE

### TECHNICAL PROBLEM

The technical problem to be solved by the present disclosure is to provide a method of operating a device in a wireless communication system and a device using the method.

### TECHNICAL SOLUTION

A method of operating a device in a wireless communication system and a device using the method are provided. According to the method, the UE receives MCS (modulation and coding scheme) information indicating an MCS index, determines a modulation order applied to a specific resource based on the MCS information, and transmits a data channel by applying the determined modulation order. In this case, when the specific resource is an HD (half duplex) resource, a first modulation order is determined as the modulation order applied to the HD resource, and, based on the specific resource being an FD (full duplex) resource, a second modulation order is determined as the modulation order for the FD resource, wherein the first modulation order and the second modulation order are different from each other.

In another aspect, a UE, apparatus, and computer-readable medium for executing the above method is provided.

In another aspect, a method of operating a base station and a base station using the method are provided. According to the method of operating the base station, the base station transmits, to a UE, MCS (modulation and coding scheme) information indicating an MCS index, and receives, in a specific resource, a data channel to which a modulation order based on the MCS information is applied. In this case, when the specific resource is an HD (half duplex) resource, a first modulation order is determined as the modulation order applied to the HD resource, and, based on the specific resource being an FD (full duplex) resource, a second modulation order is determined as the modulation order for the FD resource, wherein the first modulation order and the second modulation order are different from each other.

**ADVANTAGEOUS EFFECTS**

According to the method of the present disclosure, even when the same transport block is transmitted across resources of different types, for example, HD resources and FD resources, an MCS tailored to a channel environment for each resource in which the transport block is transmitted may be applied, thereby improving transmission performance of the transport block.

In addition, when the transport block is transmitted through resources of different types, a method of determining the TBS is clarified, thereby preventing occurrence of ambiguity.

**BRIEF DESCRIPTION OF THE DRAWINGS**

FIG. 1 illustrates a wireless communication system to which the present disclosure can be applied.
FIG. 2 is a block diagram showing the radio protocol architecture for the user plane.
FIG. 3 is a block diagram showing the radio protocol structure for the control plane.
FIG. 4 illustrates the system structure of a next-generation radio access network (NG-RAN) to which NR is applied.
FIG. 5 illustrates the functional division between NG-RAN and 5GC.
FIG. 6 illustrates a frame structure that can be applied in NR.
FIG. 7 illustrates the slot structure of an NR frame.
FIG. 8 illustrates the CORESET.
FIG. 9 shows an example of a frame structure for a new wireless access technology.
FIG. 10 illustrates the structure of a self-contained slot.
FIG. 11 illustrates physical channels and typical signal transmission.
FIG. 12 is an example of PUSCH repetition type A.
FIG. 13 is an example of PUSCH repetition type B.
FIG. 14 shows examples of how to apply full duplex within an intra-carrier.
FIG. 15 shows an example in which a time resource operating in half duplex (HD) and a time resource operating in full duplex (FD) such as SBFD or SSFD exist together.
FIG. 16 shows an example of a first time resource, a second time resource, a first frequency resource and a second frequency resource.
FIG. 17 shows another example of a first time resource, a second time resource, a first frequency resource, and a second frequency resource.
FIG. 18 illustrates examples in which a PUSCH is transmitted across FD resources and HD resources.
FIG. 19 illustrates other examples in which a PUSCH is transmitted across FD resources and HD resources.
FIG. 20 illustrates an operation method of a UE in a wireless communication system.
FIG. 21 illustrates the signaling process and operation between a base station and a UE when applying the method of FIG. 20.
FIG. 22 illustrates a wireless device that can be applied the present specification.
FIG. 23 shows an example of a signal processing module structure.
FIG. 24 shows another example of the structure of a signal processing module in a transmission device.
FIG. 25 shows an example of a wireless communication device according to an implementation example of the present disclosure.
FIG. 26 shows another example of a wireless device.
FIG. 27 illustrates the communication system 1 applied to this specification.

**MODE FOR INVENTION**

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

Technical features described individually in one figure in the present specification may be individually implemented, or may be simultaneously implemented.

The drawings hereinafter have been prepared to describe specific examples of the present specification. Since specific names of devices or specific names of signals/messages/fields described in the drawings are illustratively presented, technical features of the present specification are not limited to the specific names used in the drawings below.

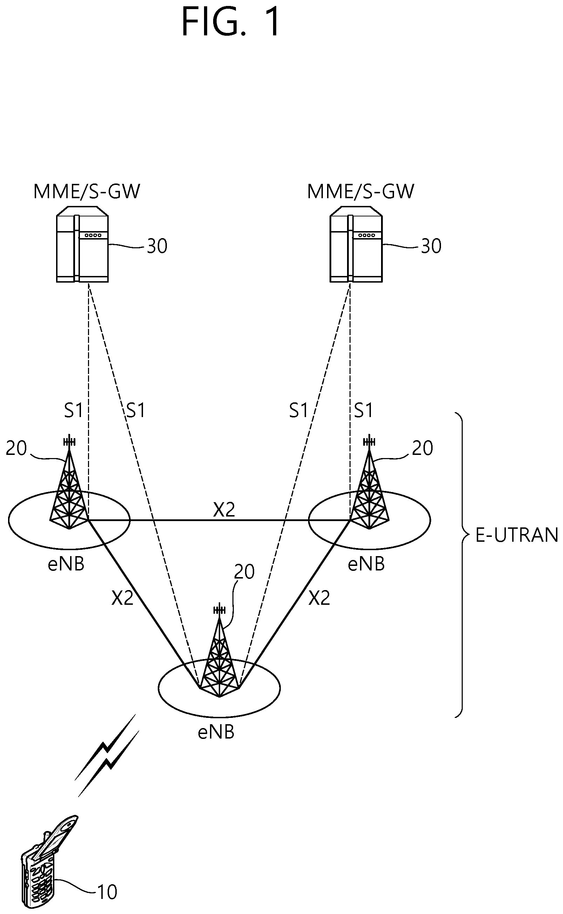

FIG. 1 illustrates a wireless communication system to which the present disclosure can be applied. This may also be called E-UTRAN (Evolved-UMTS Terrestrial Radio Access Network), or LTE (Long Term Evolution)/LTE-A system.

The E-UTRAN includes a base station (BS) 20 which provides a control plane and a user plane to a user equipment (UE) 10. The UE 10 may be fixed or mobile, and may be referred to as another terminology, such as a mobile station (MS), a user terminal (UT), a subscriber station (SS), a mobile terminal (MT), a wireless device, terminal etc. The BS 20 is generally a fixed station that communicates with the UE 10 and may be referred to as another terminology, such as an evolved node-B (eNB), a base transceiver system (BTS), an access point, etc.

The BSs are interconnected by means of an X2 interface. The BSs are also connected by means of an S1 interface to an evolved packet core (EPC) 30, more specifically, to a mobility management entity (MME) through S1-MME and to a serving gateway (S-GW) through S1-U.

The EPC 30 includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

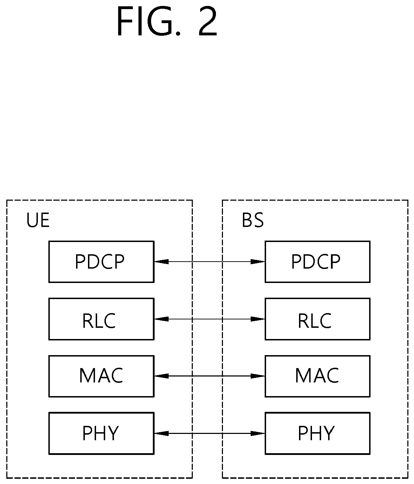

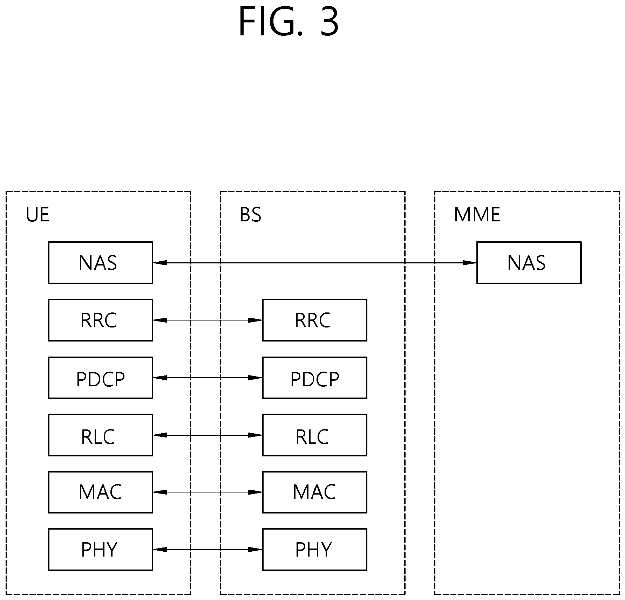

FIG. 2 is a block diagram showing the radio protocol architecture for the user plane. FIG. 3 is a block diagram showing the radio protocol structure for the control plane. The user plane is a protocol stack for user data transmission. The control plane is a protocol stack for control signal transmission.

Referring to FIG. 2 and FIG. 3, a PHY layer provides an upper layer (=higher layer) with an information transfer service through a physical channel. The PHY layer is connected to a medium access control (MAC) layer which is a higher layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for subframe transmission.

Hereinafter, a new radio access technology (new RAT, NR) will be described.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new RAT or NR in the present disclosure for convenience.

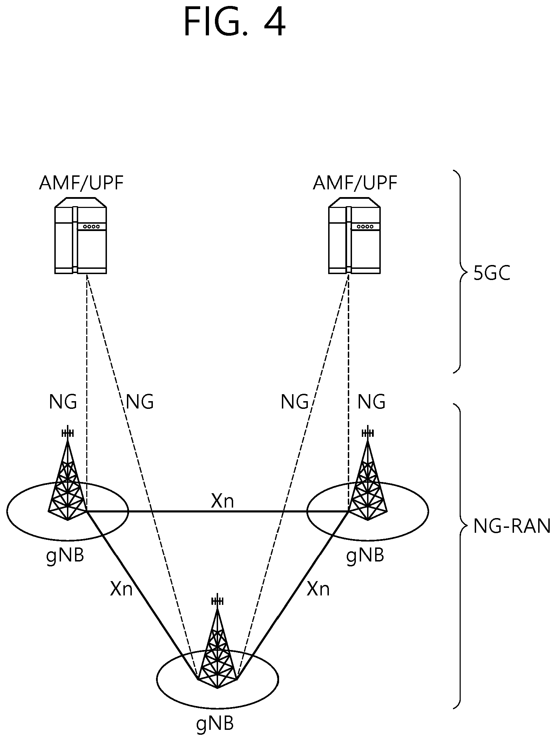

FIG. 4 illustrates a system structure of a next generation radio access network (NG-RAN) to which NR is applied.

Referring to FIG. 4, the NG-RAN may include a gNB and/or an eNB that provides user plane and control plane protocol termination to a UE. FIG. 4 illustrates the case of including only gNBs. The gNBs(eNBs) are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

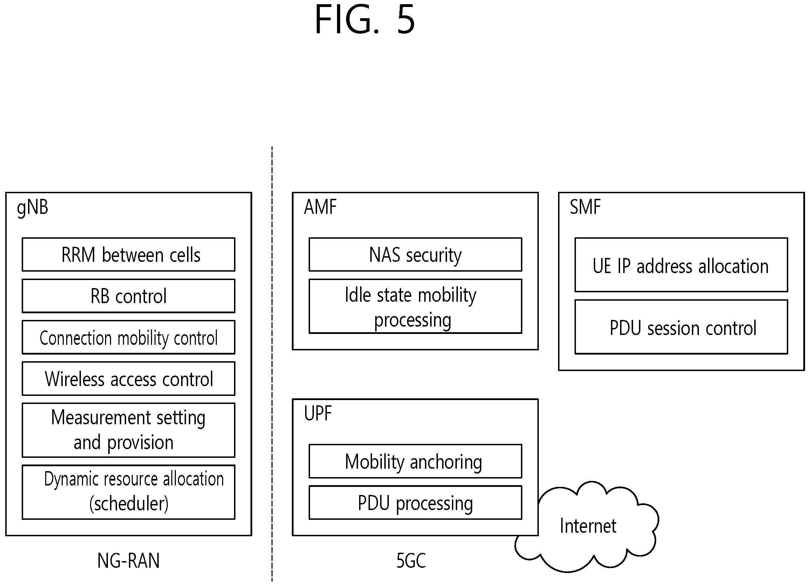

FIG. 5 illustrates a functional division between an NG-RAN and a 5GC.

Referring to FIG. 5, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

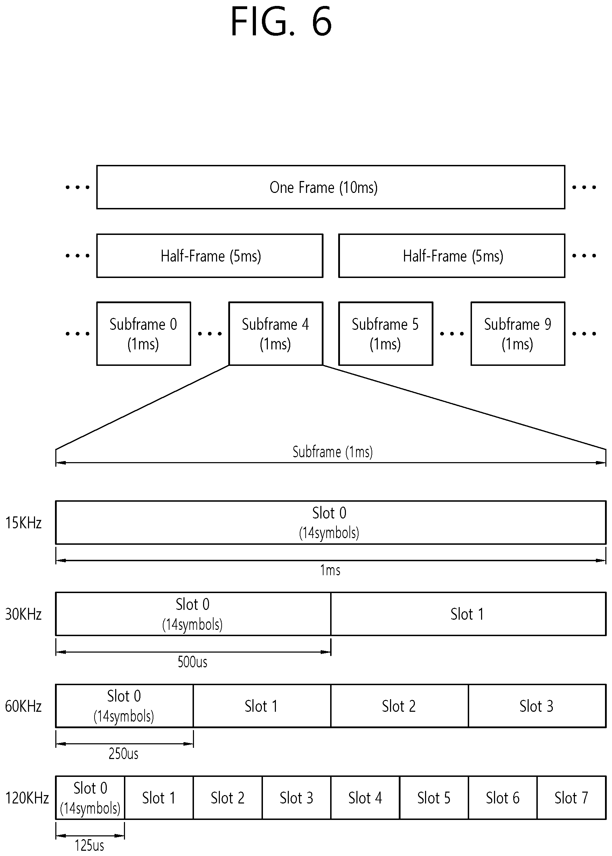

FIG. 6 illustrates an example of a frame structure that may be applied in NR.

Referring to FIG. 6, in the NR, a radio frame (hereinafter, also referred to as a frame) may be used in uplink and downlink transmissions. The frame has a length of 10ms, and may be defined as two 5ms half-frames (HFs). The HF may be defined as five 1ms subframes (SFs). The SF may be divided into one or more slots, and the number of slots within the SF depends on a subcarrier spacing (SCS). Each slot includes 12 or 14 OFDM(A) symbols according to a cyclic prefix (CP). In case of using a normal CP, each slot includes 14 symbols. In case of using an extended CP, each slot includes 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following table 1 illustrates a subcarrier spacing configuration $\mu$.

[Table 1]

| $\mu$ | $\Delta f = 2^{\mu} \cdot 15$[kHz] | Cyclic prefix (CP) |
|---|---|---|
| 0 | 15 | Normal |
| 1 | 30 | Normal |
| 2 | 60 | Normal Extended |
| 3 | 120 | Normal |
| 4 | 240 | Normal |

The following table 2 illustrates the number of slots in a frame ($N^{frame,\mu}_{slot}$), the number of slots in a subframe ($N^{subframe,\mu}_{slot}$), the number of symbols in a slot ($N^{slot}_{symb}$), and the like, according to subcarrier spacing configurations $\mu$.

[Table 2]

| $\mu$ | $N^{slot}_{syrnb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

FIG. 6 illustrates a case of $\mu$=0, 1, 2, 3.

Table 2-1 below illustrates that the number of symbols per slot, the number of slots per frame, and the number of slots per subframe vary depending on the SCS, in case of using an extended CP.

[Table 2-1]

| SCS($15*2^{\mu}$) | $N^{slot}_{symb}$ | $N^{frame,\mu}_{slot}$ | $N^{subframe,\mu}_{slot}$ |
|---|---|---|---|
| 60KHz ($\mu$=2) | 12 | 40 | 4 |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

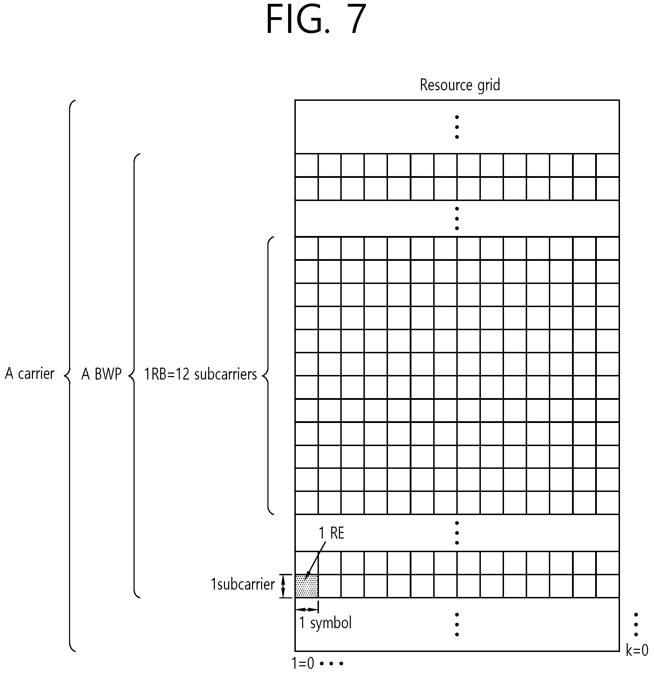

FIG. 7 illustrates a slot structure.

A slot may include a plurality of symbols in a time domain. For example, in case of a normal CP, one slot may include 14 symbols (or 7 symbols). However, in case of an extended CP, one slot may include 12 symbols (or 6 symbols). A carrier may include a plurality of subcarriers in a frequency domain. A resource block (RB) may be defined as a plurality of consecutive subcarriers (e.g., 12 subcarriers) in the frequency domain. A bandwidth part (BWP) may be defined as a plurality of consecutive (physical) resource blocks ((P)RBs) in the frequency domain, and the BWP may correspond to one numerology (e.g., SCS, CP length, and so on). The carrier may include up to N (e.g., 5) BWPs. Data communication may be performed via an active BWP, and only one BWP may be activated for one UE. In a resource grid, each element may be referred to as a resource element (RE), and one complex symbol may be mapped thereto.

A physical downlink control channel (PDCCH) may include one or more control channel elements (CCEs) as illustrated in the following table 3.

[Table 3]

| Aggregation level | Number of CCEs |
|---|---|
| 1 | 1 |
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

Monitoring implies decoding of each PDCCH candidate according to a downlink control information (DCI) format. The UE monitors a set of PDCCH candidates in one or more CORESETs (to be described below) on an active DL BWP of each activated serving cell in which PDCCH monitoring is configured, according to a corresponding search space set.

A new unit called a control resource set (CORESET) may be introduced in the NR. The UE may receive a PDCCH in the CORESET.

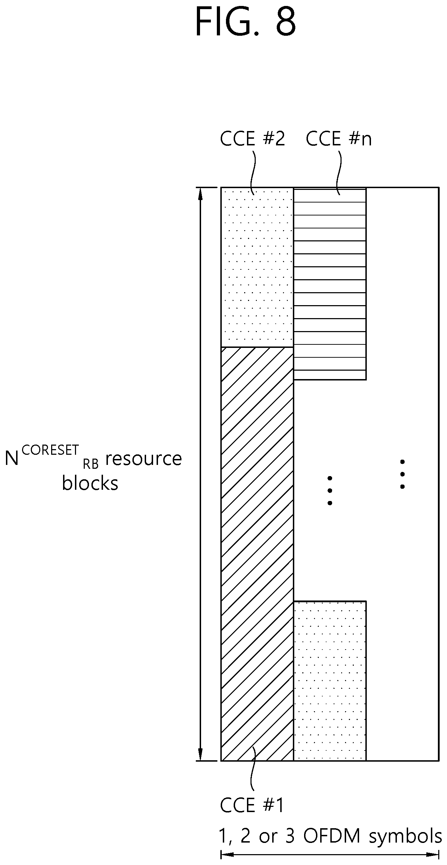

FIG. 8 illustrates CORESET.

Referring to FIG. 8, the CORESET includes $N^{CORESET}_{RB}$ number of resource blocks in the frequency domain, and $N^{CORESET}_{symb} \in \{1, 2, 3\}$ number of symbols in the time domain. $N^{CORESET}_{RB}$ and $N^{CORESET}_{symb}$ may be provided by a base station via higher layer signaling. As illustrated in FIG. 8, a plurality of CCEs (or REGs) may be included in the CORESET.

The UE may attempt to detect a PDCCH in units of 1, 2, 4, 8, or 16 CCEs in the CORESET. One or a plurality of CCEs in which PDCCH detection may be attempted may be referred to as PDCCH candidates.

A plurality of CORESETs may be configured for the UE.

A control region in the related art wireless communication system (e.g., LTE/LTE-A) is configured over the entire system BW used by a base station (BS). All the UEs, excluding some (e.g., eMTC/NB-IoT UE) supporting only a narrow band, shall be able to receive wireless signals of the entire system BW of the BS in order to properly receive/decode control information transmitted by the BS.

On the other hand, in NR, CORESET described above was introduced. CORESET is radio resources for control information to be received by the UE and may use only a portion, rather than the entirety of the system bandwidth. The BS may allocate the CORESET to each UE and may transmit control information through the allocated CORESET. In the NR, the UE may receive control information from the BS, without necessarily receiving the entire system BW.

The CORESET may include a UE-specific CORESET for transmitting UE-specific control information and a common CORESET for transmitting control information common to all UEs.

On the other hand, NR may require high reliability depending on the application field. In this situation, the target block error rate (BLER) for downlink control information (DCI) transmitted through a downlink control channel (e.g., physical downlink control channel: PDCCH) may be significantly lower than that of the prior art. As an example of a method to satisfy the requirement for such high reliability, the amount of content included in DCI can be reduced and/or the amount of resources used when transmitting DCI can be increased. At this time, the resources may include at least one of resources in the time domain, resources in the frequency domain, resources in the code domain, and resources in the spatial domain.

In NR, the following technologies/features can be applied.

<Self-contained subframe structure>

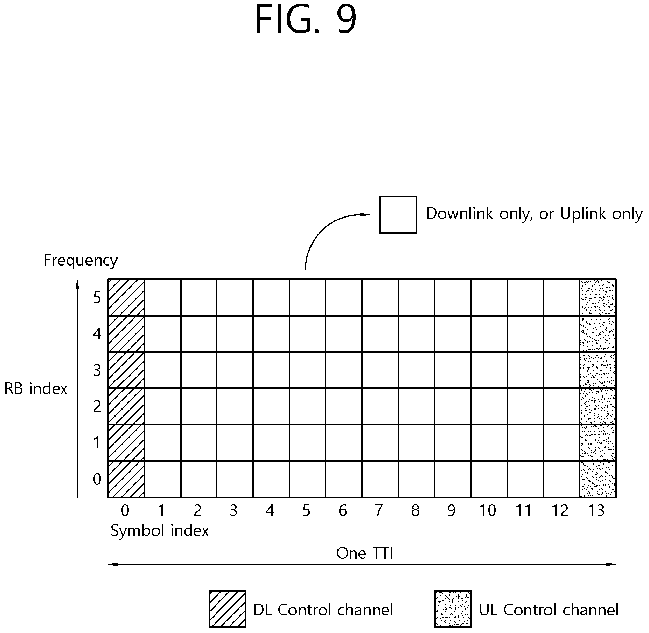

FIG. 9 shows an example of a frame structure for a new wireless access technology.

In NR, as shown in FIG. 9, a structure in which a control channel and a data channel are time-division-multiplexed within one TTI can be considered as a frame structure in order to minimize latency.

FIG. 9 illustrates an example in which a downlink control area is located in a front portion of a TTI, and an uplink control area is located in a rear portion of the TTI. An area between the downlink control area and the uplink control area may be used for transmission of downlink data (DL data) or may be used for transmission of uplink data (UL data). A feature of this structure is that downlink (DL) reception and uplink (UL) transmission are sequentially performed within one subframe/slot, such that DL data may be received and an UL ACK/NACK (Acknowledgement/Not-acknowledgement) may be transmitted within one subframe/slot. As a result, a time taken until data retransmission in a case where a data transmission error occurs is reduced, and thus latency of final data delivery may be minimized.

As described above, in a data and control TDMed subframe structure, a time gap for a base station and a UE to switch from a transmission mode to a reception mode or from the reception mode to the transmission mode may be required. To this end, some OFDM symbols at a time when DL switches to UL may be set to a guard period (GP) in the self-contained subframe structure.

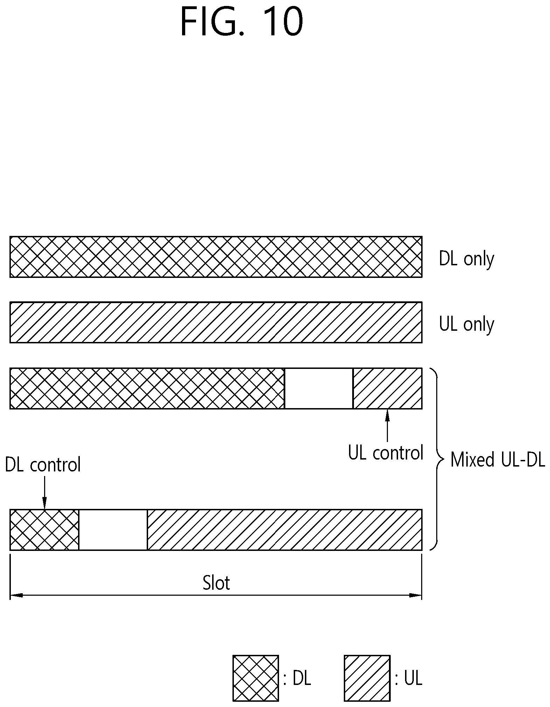

FIG. 10 illustrates a structure of a self-contained slot.

In an NR system, a DL control channel, DL or UL data, a UL control channel, and the like may be contained in one slot. For example, first N symbols (hereinafter, DL control region) in the slot may be used to transmit a DL control channel, and last M symbols (hereinafter, UL control region) in the slot may be used to transmit a UL control channel. N and M are integers greater than or equal to 0. A resource region (hereinafter, a data region) which exists between the DL control region and the UL control region may be used for DL data transmission or UL data transmission. For example, the following configuration may be considered. Respective durations are listed in a temporal order.

    1. DL only configuration,
    2. UL only configuration,
    3. Mixed UL-DL configuration:

        DL region + Guard period (GP) + UL control region,
        DL control region + GP + UL region.
        DL region: (i) DL data region, (ii) DL control region + DL data region.
        UL region: (i) UL data region, (ii) UL data region + UL control region.

A PDCCH may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Downlink control information (DCI), for example, DL data scheduling information, UL data scheduling information, and the like, may be transmitted on the PDCCH. Uplink control information (UCI), for example, ACK/NACK information about DL data, channel state information (CSI), and a scheduling request (SR), may be transmitted on the PUCCH. A GP provides a time gap in a process in which a BS and a UE switch from a TX mode to an RX mode or a process in which the BS and the UE switch from the RX mode to the TX mode. Some symbols at the time of switching from DL to UL within a subframe may be configured as the GP.

<Analog beamforming #1>

Wavelengths are shortened in millimeter wave (mmW) and thus a large number of antenna elements can be installed in the same area. That is, the wavelength is 1 cm at 30 GHz and thus a total of 100 antenna elements can be installed in the form of a 2-dimensional array at an interval of 0.5 lambda (wavelength) in a panel of 5×5 cm. Accordingly, it is possible to increase a beamforming (BF) gain using a large number of antenna elements to increase coverage or improve throughput in mmW.

In this case, if a transceiver unit (TXRU) is provided to adjust transmission power and phase per antenna element, independent beamforming per frequency resource can be performed. However, installation of TXRUs for all of about 100 antenna elements decreases effectiveness in terms of cost. Accordingly, a method of mapping a large number of antenna elements to one TXRU and controlling a beam direction using an analog phase shifter is considered. Such analog beamforming can form only one beam direction in all bands and thus cannot provide frequency selective beamforming.

Hybrid beamforming (BF) having a number B of TXRUs which is smaller than Q antenna elements can be considered as an intermediate form of digital BF and analog BF. In this case, the number of directions of beams which can be simultaneously transmitted are limited to B although it depends on a method of connecting the B TXRUs and the Q antenna elements.

<Analog beamforming #2>

When a plurality of antennas is used in NR, hybrid beamforming which is a combination of digital beamforming and analog beamforming is emerging. Here, in analog beamforming (or RF beamforming) an RF end performs precoding (or combining) and thus it is possible to achieve the performance similar to digital beamforming while reducing the number of RF chains and the number of D/A (or A/D) converters. For convenience, the hybrid beamforming structure may be represented by N TXRUs and M physical antennas. Then, the digital beamforming for the L data layers to be transmitted at the transmitting end may be represented by an N by L matrix, and the converted N digital signals are converted into analog signals via TXRUs, and analog beamforming represented by an M by N matrix is applied.

System information of the NR system may be transmitted in a broadcasting manner. In this case, in one symbol, analog beams belonging to different antenna panels may be simultaneously transmitted. A scheme of introducing a beam RS (BRS) which is a reference signal (RS) transmitted by applying a single analog beam (corresponding to a specific antenna panel) is under discussion to measure a channel per analog beam. The BRS may be defined for a plurality of antenna ports, and each antenna port of the BRS may correspond to a single analog beam. In this case, unlike the BRS, a synchronization signal or an xPBCH may be transmitted by applying all analog beams within an analog beam group so as to be correctly received by any UE.

In the NR, in a time domain, a synchronization signal block (SSB, or also referred to as a synchronization signal and physical broadcast channel (SS/PBCH)) may consist of 4 OFDM symbols indexed from 0 to 3 in an ascending order within a synchronization signal block, and a PBCH related with a primary synchronization signal (PSS), secondary synchronization signal (SSS), and demodulation reference signal (DMRS) may be mapped to the symbols. As described above, the synchronization signal block may also be represented by an SS/PBCH block.

In NR, since a plurality of synchronization signal blocks(SSBs) may be transmitted at different times, respectively, and the SSB may be used for performing initial access (IA), serving cell measurement, and the like, it is preferable to transmit the SSB first when transmission time and resources of the SSB overlap with those of other signals. To this purpose, the network may broadcast the transmission time and resource information of the SSB or indicate them through UE-specific RRC signaling.

In NR, beams may be used for transmission and reception. If reception performance of a current serving beam is degraded, a process of searching for a new beam through the so-called Beam Failure Recovery (BFR) may be performed.

Since the BFR process is not intended for declaring an error or failure of a link between the network and a UE, it may be assumed that a connection to the current serving cell is retained even if the BFR process is performed. During the BFR process, measurement of different beams (which may be expressed in terms of CSI-RS port or Synchronization Signal Block (SSB) index) configured by the network may be performed, and the best beam for the corresponding UE may be selected. The UE may perform the BFR process in a way that it performs an RACH process related with a beam yielding a good measurement result.

Now, a transmission configuration indicator (hereinafter, TCI) state will be described. The TCI state may be configured for each CORESET of a control channel, and may determine a parameter for determining an RX beam of the UE, based on the TCI state.

For each DL BWP of a serving cell, a UE may be configured for three or fewer CORESETs. Also, a UE may receive the following information for each CORESET.

1) CORESET index p (one of 0 to 11, where index of each CORESET may be determined uniquely among BWPs of one serving cell),
2) PDCCH DM-RS scrambling sequence initialization value,
3) Duration of a CORESET in the time domain (which may be given in symbol units),
4) Resource block set,
5) CCE-to-REG mapping parameter,
6) Antenna port quasi co-location indicating quasi co-location (QCL) information of a DM-RS antenna port for receiving a PDCCH in each CORESET (from a set of antenna port quasi co-locations provided by a higher layer parameter called 'TCI-State'),
7) Indication of presence of Transmission Configuration Indication (TCI) field for a specific DCI format transmitted by the PDCCH in the CORESET, and so on.

QCL will be described. If a characteristic of a channel through which a symbol on one antenna port is conveyed can be inferred from a characteristic of a channel through which a symbol on the other antenna port is conveyed, the two antenna ports are said to be quasi co-located (QCLed). For example, when two signals A and B are transmitted from the same transmission antenna array to which the same/similar spatial filter is applied, the two signals may go through the same/similar channel state. From a perspective of a receiver, upon receiving one of the two signals, another signal may be detected by using a channel characteristic of the received signal.

In this sense, when it is said that the signals A and B are quasi co-located (QCLed), it may mean that the signals A and B have went through a similar channel condition, and thus channel information estimated to detect the signal A is also useful to detect the signal B. Herein, the channel condition may be defined according to, for example, a Doppler shift, a Doppler spread, an average delay, a delay spread, a spatial reception parameter, or the like.

A 'TCI-State' parameter associates one or two downlink reference signals to corresponding QCL types (QCL types A, B, C, and D, see Table 4).

[Table 4]

| QCL Type | Description |
| --- | --- |

(continued)

| | |
|---|---|
| QCL-TypeA | Doppler shift, Doppler spread, Average delay, Delay spread |
| QCL-TypeB | Doppler shift, Doppler spread |
| QCL-TypeC | Doppler shift, Average delay |
| QCL-TypeD | Spatial Rx parameter |

Each 'TCI-State' may include a parameter for configuring a QCL relation between one or two downlink reference signals and a DM-RS port of a PDSCH (or PDCCH) or a CSI-RS port of a CSI-RS resource.

Meanwhile, for each DL BWP configured to a UE in one serving cell, the UE may be provided with 10 (or less) search space sets. For each search space set, the UE may be provided with at least one of the following information.

1) search space set index s ($0 \leq s < 40$), 2) an association between a CORESET p and the search space set s, 3) a PDCCH monitoring periodicity and a PDCCH monitoring offset (slot unit), 4) a PDCCH monitoring pattern within a slot (e.g., indicating a first symbol of a CORSET in a slot for PDCCH monitoring), 5) the number of slots in which the search space set s exists, 6) the number of PDCCH candidates per CCE aggregation level, 7) information indicating whether the search space set s is a CSS (common search space) or a USS (UE-specific search space), and the like.

In the NR, a CORESET#0 may be configured by a PBCH (or a UE-dedicated signaling for handover or a PSCell configuration or a BWP configuration). A search space (SS) set#0 configured by the PBCH may have monitoring offsets (e.g., a slot offset, a symbol offset) different for each associated SSB. This may be required to minimize a search space occasion to be monitored by the UE. Alternatively, this may be required to provide a beam sweeping control/data region capable of performing control/data transmission based on each beam so that communication with the UE is persistently performed in a situation where a best beam of the UE changes dynamically.

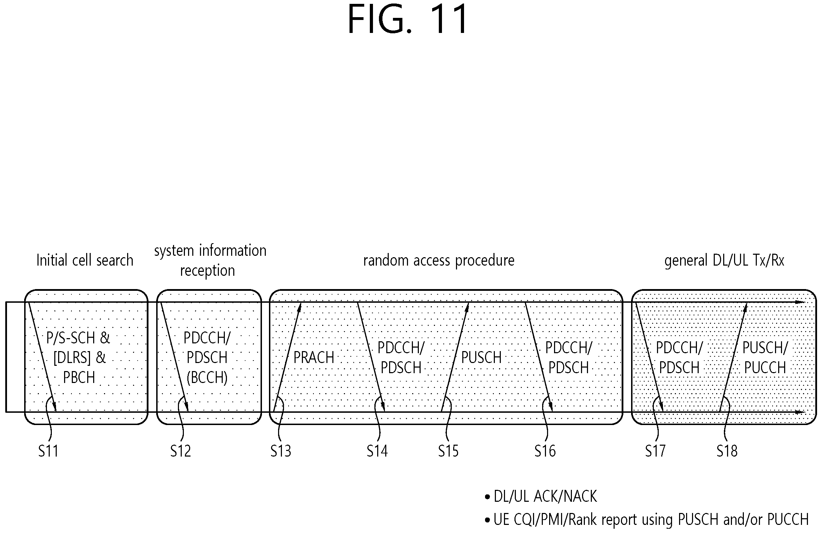

FIG. 11 illustrates physical channels and typical signal transmission.

Referring to FIG. 11, in a wireless communication system, a UE receives information from a BS through a downlink (DL), and the UE transmits information to the BS through an uplink (UL). The information transmitted/received by the BS and the UE includes data and a variety of control information, and there are various physical channels according to a type/purpose of the information transmitted/received by the BS and the UE.

The UE which is powered on again in a power-off state or which newly enters a cell performs an initial cell search operation such as adjusting synchronization with the BS or the like (S11). To this end, the UE receives a primary synchronization channel (PSCH) and a secondary synchronization channel (SSCH) from the BS to adjust synchronization with the BS, and acquire information such as a cell identity (ID) or the like. In addition, the UE may receive a physical broadcast channel (PBCH) from the BS to acquire broadcasting information in the cell. In addition, the UE may receive a downlink reference signal (DL RS) in an initial cell search step to identify a downlink channel state.

(Initial) cell search can be said to be a procedure in which the UE obtains time and frequency synchronization with a cell and detects the cell ID of the cell. Cell search may be based on the cell's primary synchronization signal and secondary synchronization signal, and PBCH DMRS.

Upon completing the initial cell search, the UE may receive a physical downlink control channel (PDCCH) and a physical downlink control channel (PDSCH) corresponding thereto to acquire more specific system information (S12).

Thereafter, the UE may perform a random access procedure to complete an access to the BS (S13 ~ S16). Specifically, the UE may transmit a preamble through a physical random access channel (PRACH) (S13), and may receive a random access response (RAR) for the preamble through a PDCCH and a PDSCH corresponding thereto (S14). Thereafter, the UE may transmit a physical uplink shared channel (PUSCH) by using scheduling information in the RAR (S15), and may perform a contention resolution procedure such as the PDCCH and the PDSCH corresponding thereto (this can be said to be the process of receiving a competition resolution message) (S16).

After performing the aforementioned procedure, the UE may perform PDCCH/PDSCH reception (S17) and PUSCH/physical uplink control channel (PUCCH) transmission (S18) as a typical uplink/downlink signal transmission procedure. Control information transmitted by the UE to the BS is referred to as uplink control information (UCI). The UCI includes hybrid automatic repeat and request (HARQ) acknowledgement (ACK)/negative-ACK (NACK), scheduling request (SR), channel state information (CSI), or the like. The CSI includes a channel quality indicator (CQI), a precoding matrix indicator (PMI), a rank indication (RI), or the like. In general, the UCI is transmitted through the PUCCH. However, when control information and data are to be transmitted simultaneously, the UCI may be transmitted through the PUSCH. In addition, the UE may aperiodically transmit the UCI through the PUSCH according to a request/indication of a network.

In order to enable reasonable battery consumption when bandwidth adaptation (BA) is configured, only one uplink BWP and one downlink BWP or only one downlink/uplink BWP pair for each uplink carrier may be activated at once in an active serving cell, and all other BWPs configured in the UE are deactivated. In the deactivated BWPs, the UE does not monitor the PDCCH, and does not perform transmission on the PUCCH, PRACH, and UL-SCH.

For the BA, RX and TX bandwidths of the UE are not necessarily as wide as a bandwidth of a cell, and may be adjusted. That is, it may be commanded such that a width is changed (e.g., reduced for a period of low activity for power saving), a position in a frequency domain is moved (e.g., to increase scheduling flexibility), and a subcarrier spacing is changed (e.g., to allow different services). A subset of the entire cell bandwidth of a cell is referred to as a bandwidth part (BWP), and the BA is acquired by configuring BWP(s) to the UE and by notifying the UE about a currently active BWP among configured BWPs. When the BA is configured, the UE only needs to monitor the PDCCH on one active BWP. That is, there is no need to monitor the PDCCH on the entire downlink frequency of the cell. A BWP inactive timer (independent of the aforementioned DRX inactive timer) is used to switch an active BWP to a default BWP. That is, the timer restarts when PDCCH decoding is successful, and switching to the default BWP occurs when the timer expires.

Hereinafter, an integrated access and backhaul link (IAB) will be described. Hereinafter, for convenience of description, a proposed method will be described based on a new RAT (NR) system. However, the range of the system to which the proposed method is applied is expandable to other systems such as 3GPP LTE/LTE-A systems in addition to the NR system.

One of the potential technologies aimed at enabling future cellular network deployment scenarios and applications is support for wireless backhaul and relay links, and it enables flexible and highly dense deployment of NR cells without the need to proportionally densify the transport network.

It is expected that greater bandwidth in NR compared to LTE will be available (e.g., mmWave spectrum) with the native deployment of massive MIMO or multi-beam systems, thus, occasions are created for the development and deployment of integrated access and backhaul links. This makes it easier of a dense network of self-backhauled NR cells in a more integrated manner by establishing multiple control and data channels/procedures defined to provide access or access to the UEs. Such systems are referred to as integrated access and backhaul links (IAB).

This disclosure defines the following.

- AC (x): an access link between the node (x) and the UE(s).
- BH (xy): a backhaul link between the node (x) and the node (y).

In this case, the node may mean a donor gNB (DgNB) or a relay node (RN). Here, the DgNB or the donor node may be a gNB that provides a function to support backhaul to IAB nodes.

When relay node 1 and relay node 2 exist, relay node 1 which is connected to relay node 2 by a backhaul link and relaying data transmitted and received to relay node 2 is called a parent node of relay node 2, and relay node 2 is called a child node of relay node 1.

<PUSCH repetitions>

PUSCH repetition types A and B were introduced in the standard specifications (e.g., NR Rel-15/16). Transmission is performed as follows depending on the PUSCH repetition type.

1) PUSCH repetition type A

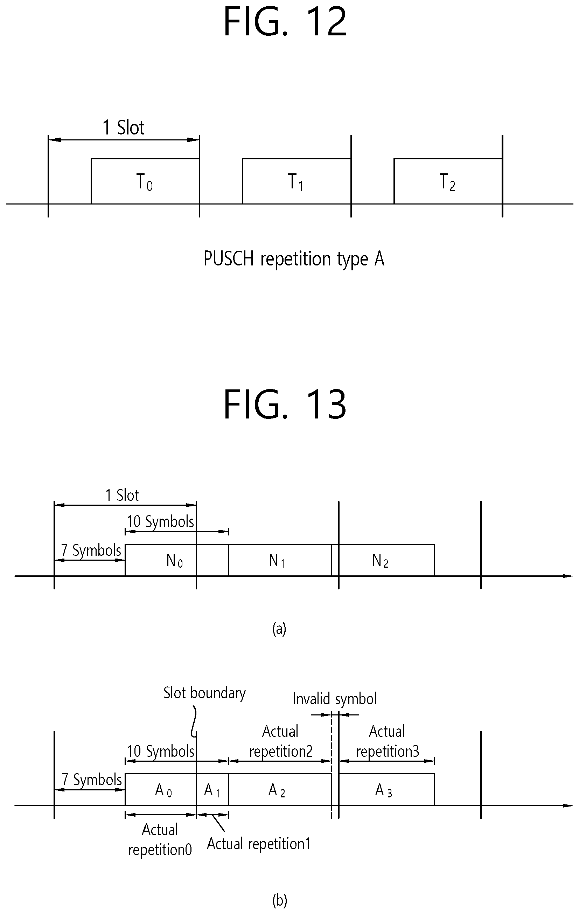

FIG. 12 is an example of PUSCH repetition type A.

Referring to FIG. 12, PUSCH repetition type A is a slot-based PUSCH repetition transmission, and repetition is performed with the same PUSCH transmission start symbol position and PUSCH transmission symbol length for each slot, as illustrated in FIG. 12. At this time, if there is an invalid symbol that cannot be used for PUSCH transmission among the symbol resources that constitute a specific PUSCH repetition, the transmission of the corresponding PUSCH repetition is dropped and not performed. For example, when a total of four PUSCH repetition transmissions of Rep0, Rep1, Rep2, and Rep3 are performed in slots N, N+1, N+2, and N+3 (one PUSCH repetition is transmitted in each slot), if the symbol resources constituting Rep1 include an invalid symbol, the transmission of Rep1 is dropped, and only the transmissions of Rep0, Rep2, and Rep3 are performed. Therefore, the actual number of repetitions performed may be less than the configured number of repetitions.

For PUSCH repetition type A, frequency hopping can be configured for the UE by higher layer parameters. One of two frequency hopping modes can be configured.

i) Frequency hopping within a slot (intra-slot frequency hopping) is applicable to single slot and multi-slot PUSCH transmission.

ii) Inter-slot frequency hopping is applicable to multi-slot PUSCH transmission.

2) PUSCH repetition type B

FIG. 13 is an example of PUSCH repetition type B.

Referring to FIG. 13, PUSCH repetition type B is repeated in units of the symbol length in which the actual PUSCH is transmitted. For example, as in (a) of FIG. 13, when PUSCH is transmitted through 10 symbols, PUSCH repetition is performed in units of 10 consecutive symbols. At this time, repetition that determines PUSCH repetition transmission time resources without considering slot boundaries, invalid symbols, etc. is called nominal repetition. (a) of FIG. 13 shows an example in which three nominal repetitions (denoted as N0, N1, and N2) are configured.

However, in the case of actual PUSCH repetition, a single PUSCH cannot be transmitted while including a slot boundary. That is, if a nominal PUSCH transmission includes a slot boundary (e.g., N0, N2 in (a) of FIG. 13), two actual repetitions are performed with the slot boundary as the boundary, as in (b) of FIG. 13. For example, a nominal repetition N0 is performed with two actual repetitions, such as A0, A1, with the slot boundary as the boundary.

Additionally, a single PUSCH transmission can only be performed using consecutive symbols. If an invalid symbol exists in the time resource where a PUSCH repetition should be transmitted, the actual repetition is formed using consecutive symbols with the invalid symbol as the boundary. For example, if symbols #0 to #9 constitute a nominal repetition and symbols #3 to #5 are invalid symbols, symbols #0 to #2 and symbols #6 to #9, excluding the invalid symbol, each constitute an actual repetition.

Invalid symbols may include the following:

i) Downlink symbol configured by semi-static TDD UL-DL configuration,
ii) an invalid symbol pattern configured by RRC (which may be configured by the invalid symbol pattern indicator),
iii) SSB symbol configured by SIB1, SSB symbol configured by 'ServngCellConfigCommon',
iv) Symbol for PDCCH for SIB1,
v) Invalid symbol for DL-UL switching configured by RRC.

If a symbol that cannot be used for PUSCH transmission (e.g., a DL symbol indicated by DCI format 2_0) is included within one actual repetition resource, the corresponding actual repetition transmission is dropped and not performed.

Now, full duplex operation will be described.

In 5G, new service types such as extended reality (XR), artificial intelligence-based service, and self-driving car are emerging. These services have characteristics that dynamically change traffic in both downlink (DL) and uplink (UL) directions, and require low latency for traffic (e.g., packets) to be transmitted. In 5G services, traffic will increase explosively to support these various new use cases.

Existing semi-static or dynamic TDD UL/DL configurations have limitations such as transmission time delay and interference between operators. The existing FDD method has limitations in terms of efficient frequency resource utilization in the DL/UL direction. Therefore, for low latency and efficient resource utilization in NR, the introduction of full duplex operation within a single carrier is being discussed.

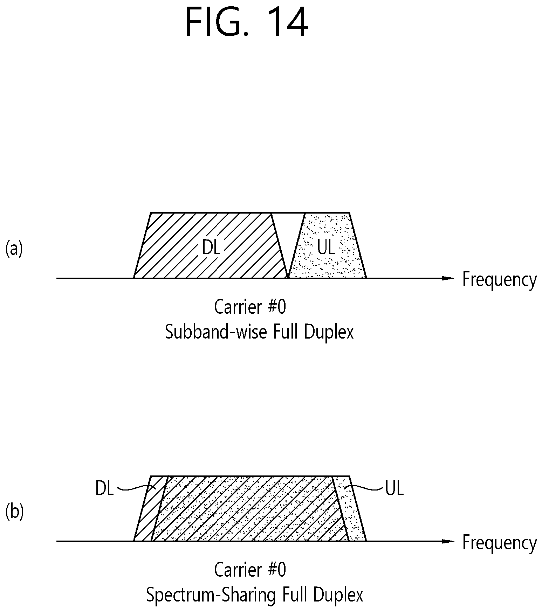

FIG. 14 shows examples of how to apply full duplex within an intra-carrier.

Referring to FIG. 14, the full duplex method includes subband-wise full duplex (hereinafter, it can be called subband full duplex or SBFD) as shown in (a) of FIG. 14 and spectrum sharing full duplex (hereinafter, it can be called SSFD) as shown in (b) of FIG. 14 may be considered.

In the case of SBFD, DL and UL are transmitted and received through different frequency resources within the same carrier (e.g., carrier #0). That is, different frequency resources are used in DL and UL for the same time resource.

In the case of SSFD, DL and UL are transmitted and received through the same or overlapped frequency resources within the same carrier (e.g., carrier #0). That is, the same or overlapping frequency resources can be used in DL and UL for the same time resource.

This full-duplex (FD) operation can also be used in combination with the existing half-duplex (HD) operation. For example, among time resources used for existing half-duplex-based TDD operation, some time resources may be used for full duplex operation. SBFD or SSFD operations can be performed on time resources that perform full duplex operations.

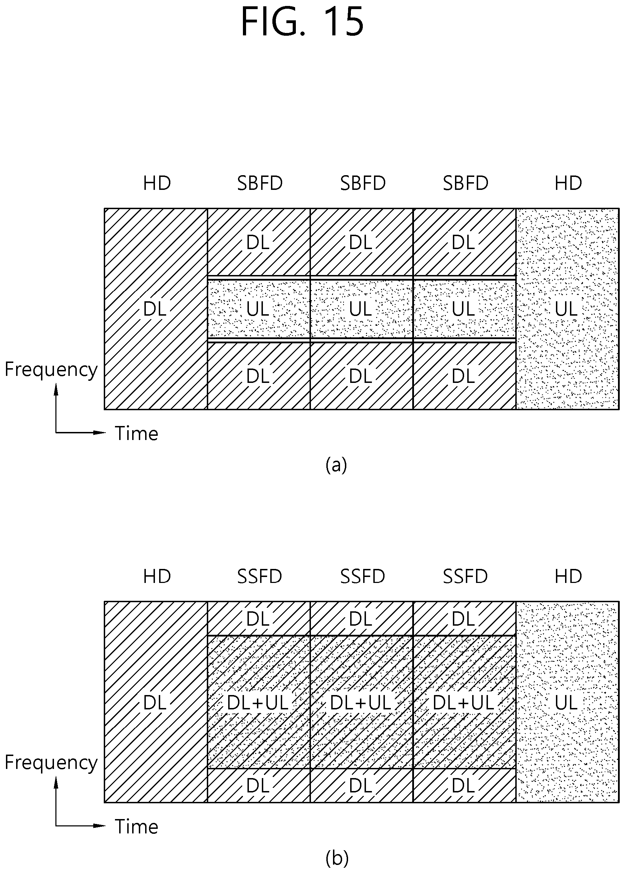

FIG. 15 shows an example in which a time resource operating in half duplex (HD) and a time resource operating in full duplex (FD) such as SBFD or SSFD exist together.

In (a) of FIG. 15, some time resources operating as SBFD are indicated as SBFD, and time resources operating as HD are indicated as HD. In (b) of FIG. 15, some time resources operating as SSFD are indicated as SSFD, and time resources operating as HD are indicated as HD. The unit of time resource may be, for example, a slot or symbol.

In time resources operating as SBFD, some frequency resources are used as DL resources, and other frequency resources are used as UL resources. Between the DL frequency resource and the UL frequency resource, there may be a guard subband that is unused and empty for both DL and UL. Guard subbands may also be referred to by other terms, such as guard frequency resources or guard subcarrier(s).

In time resources operating with SSFD, the entire frequency resource can be used for both DL and UL. Or, to reduce the impact of interference from other adjacent carriers (this may be referred to as ACI (adjacent carrier interference)), some frequency resources at one or both ends of the carrier may not be used for DL and/or UL. That is, one or both ends of the carrier can be used as an unused guard band (guard subband) for both DL and UL. Alternatively, to reduce ACI on UL reception, one or both ends of the carrier may be used only for DL transmission.

In this disclosure, a slot resource that operates as HD is referred to as a HD slot, and a slot resource that operates as SBFD and a slot resource that operates as SSFD are referred to as a SBFD slot and a SSFD slot, respectively. The SBFD slot and the SSFD slot are also collectively referred to as FD slots.

In the present disclosure, in time resources operating as FD, among all frequency resources, frequency resources operating as DL may be referred to as a DL subband, and frequency resources operating as UL may be referred to as an UL subband, for convenience.

In the case of full duplex operation, both the base station and the UE can perform full duplex operation. That is, both the base station and the UE can simultaneously perform DL and UL transmission and reception using the same or different frequency resources in the same time resource.

Alternatively, only the base station can perform full duplex operation and the UE can perform half duplex operation. The base station can simultaneously perform transmission and reception of DL and UL using the same or different frequency resources in the same time resource, but the UE only performs DL reception or UL transmission in a specific time resource. In this case, the base station performs full duplex operation by performing DL transmission and UL reception with different UEs at the same time.

The content of the present disclosure is described assuming that the base station performs/supports a full duplex operation, but the UE performs/supports a half duplex operation. However, the content of the present disclosure can be applied even when both the base station and the UE perform/support full duplex operation.

<A. Characteristics of DL/UL time/frequency resources for SBFD and SSFD operation>

A cell (base station) can perform both DL transmission and UL reception in the same time resource in an FD scheme such as SBFD or SSFD. For example, the base station may perform HD operation in a first time resource and FD operation in a second time resource (which may be a time resource other than the first time resource).

Through such operations, the network may vary a time resource for performing transmission and reception between a first time resource and a second time resource depending on a type of a signal/channel to be transmitted and received or depending on a UE performing transmission and reception. For example, for important signals/channels (e.g., an SSB and a PRACH) that are less affected by interference and for which transmission and reception performance needs to be improved, resources may be configured such that transmission and reception are performed only in the first time resource operating only in half duplex. Through this, transmission and reception performance of the signals/channels may be maintained while applying full duplex to a cell. Alternatively, in a case of a UE that is significantly affected by CLI (cross link interference) and thus is unable to properly perform transmission and reception when operating in full duplex in the second time resource, transmission and reception performance for the UE may be ensured by configuring resources such that transmission and reception are performed in the first time resource.

The UE/base station performs a DL operation or an UL operation in all frequency resources constituting an entire system bandwidth in a first time resource in which an HD operation is performed. Within the first time resource performing the HD operation, the network performs the DL operation through the 1-1 time resource and the UL operation through the 1-2 time resource. At this time, the 1-1 time resource and the 1-2 time resource do not overlap with each other.

In the second time resource performing the FD operation, the UE/base station performs DL operations through all or part of the frequency resources (first frequency resources) among the frequency resources that constitute the system BW of the cell, and performs UL operations through all or part of the frequency resources (second frequency resources).

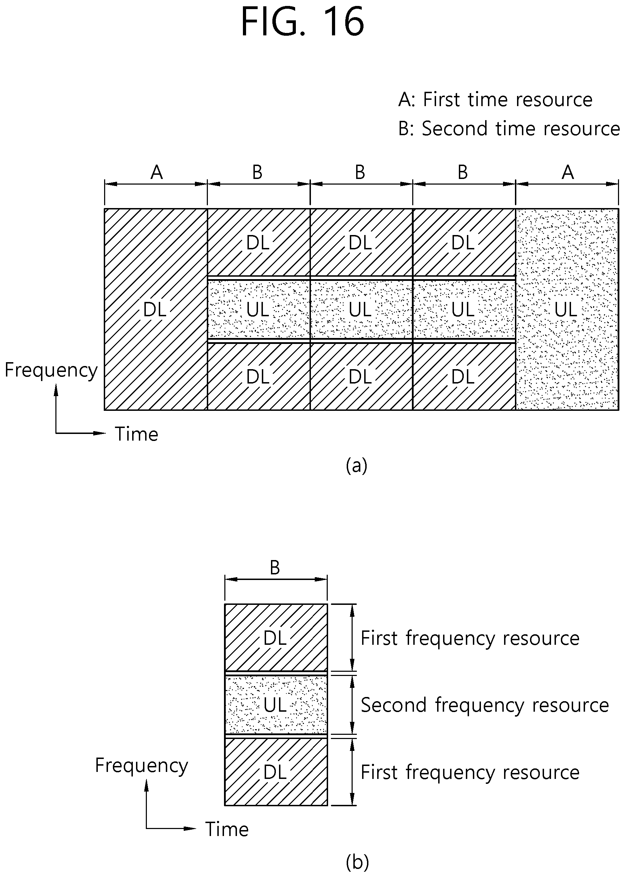

FIG. 16 shows examples of a first time resource, a second time resource, a first frequency resource, and a second frequency resource.

Referring to (a) of FIG. 16, in the first time resource (represented by A), the device is operated in HD. In the second time resource (represented by B), for example, the device may be operated as SBFD. In the first time resource, the resource indicated by DL corresponds to the above-described 1-1 time resource, and the resource indicated by UL corresponds to the above-described 1-2 time resource.

Referring to (b) of FIG. 16, in the second time resource, the frequency resource operating as DL corresponds to the above-described first frequency resource, and the frequency resource operating as UL corresponds to the above-described second frequency resource.

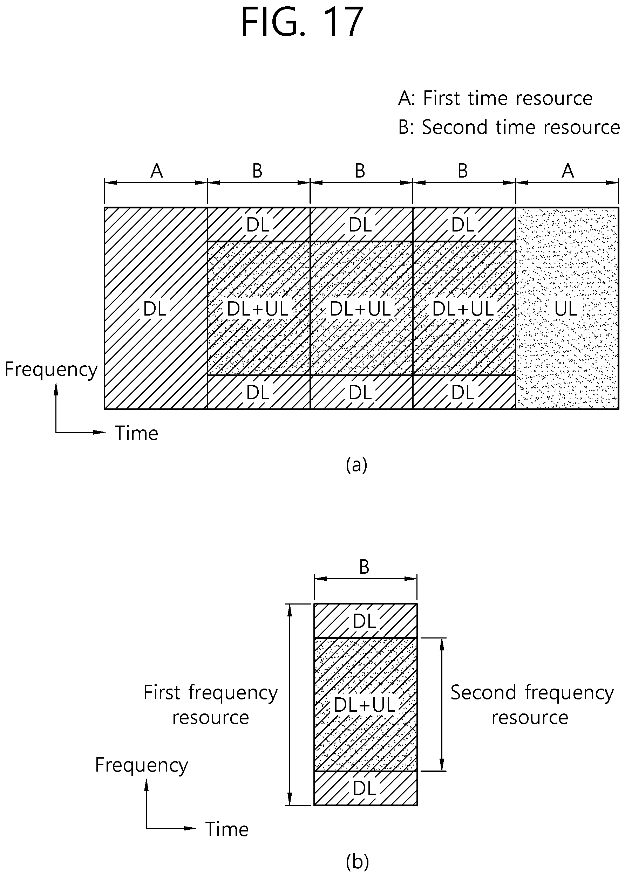

FIG. 17 shows another example of a first time resource, a second time resource, a first frequency resource, and a second frequency resource.

Referring to (a) of FIG. 17, in the first time resource (denoted by A), the device operates as a half-duplex. In the second time resource (labelled B), the device may operate, for example, as an SSFD. In the first time resource, the resource denoted DL corresponds to the 1-1 time resource described above, and the resource denoted UL corresponds to the 1-2 time resource described above.

Referring to (b) of FIG. 17, in the second time resource, the frequency resources operating as DL and DL+UL correspond to the first frequency resource described above, and the frequency resources operating as DL+UL correspond to the second frequency resource described above.

The first frequency resource and/or the second frequency resource may have all or some of the following characteristics.

1) When performing SBFD operation, the first frequency resource and the second frequency resource do not overlap with each other. This is to ensure that DL and UL operations are performed through different frequency resources. At this time, there may be frequency resources that do not correspond to both the first and second frequency resources, and these frequency resources are called guard subbands or guard frequency resources. These guard frequency resources may be needed to reduce interference from DL transmission on UL reception. The guard frequency resource may be located between the first frequency resource and the second frequency resource.

2) When performing SSFD operation, the first frequency resource and the second frequency resource may overlap. At this time, there may be frequency resources that do not correspond to both the first and second frequency resources, and these frequency resources are called guard subbands or guard frequency resources. These guard frequency resources may be needed to reduce interference from DL transmission on adjacent carriers to UL reception and/or to reduce interference from DL transmission on UL reception on adjacent carriers.

3) When performing an SBFD operation, the second frequency resource may be composed of contiguous frequency resources, and the first frequency resource may be composed of non-contiguous frequency resources. At this time, the first frequency resource may be composed of a plurality of non-contiguous sets (for example, two), and each set may be composed of contiguous frequency resources. This is to reduce interference from DL transmission on adjacent carriers to UL resources by placing the second frequency resource used for UL at the center of the frequency resources constituting the cell. Conversely, the first frequency resource may be composed of contiguous frequency resources, and the second frequency resource may be composed of non-contiguous frequency resources. At this time, the second frequency resource may be composed of multiple (e.g., two) non-contiguous sets and each set may be composed of contiguous frequency resources. This is to reduce interference from DL transmission on UL resources in adjacent carriers by placing the second frequency resource used for DL at the center of the frequency resources constituting the cell.

4) When performing SSFD operation, the second frequency resource may be composed of some frequency resources of the first frequency resource. At this time, the second frequency resource may be configured to have fewer X physical resource blocks (PRBs) on one or both edges of a carrier than the first frequency resource. This is to reduce interference from DL transmission on adjacent carriers to UL reception.

Through the operations described above, the base station may perform a half duplex operation in which only one of DL transmission or UL reception is performed in all frequency resources constituting the cell in a first time resource, and may perform a full duplex operation in which DL transmission is performed through first frequency resources within frequency resources constituting the cell and, simultaneously, UL reception is performed through second frequency resources within the frequency resources constituting the cell in a second time resource.

The network determines the 'first time resource' and 'second time resource', and the 'first frequency resource' and 'second frequency resource' as described above, and provides all or part of the corresponding information to the UE. The network may perform DL transmission to the UE in a 1-1 time resource within a first time resource and in first frequency resources within a second time resource, and may perform UL reception from the UE in a first-2 time resource within the first time resource and in second frequency resources within the second time resource.

The UE may be provided with all or some of information regarding the above-described 'first time resource' and 'second time resource' and 'first frequency resources' and 'second frequency resources' from the network, and may determine positions of the resources. The UE may perform DL reception from the network through all or some of a 1-1 time resource within a first time resource and first frequency resources within a second time resource, and may perform UL transmission to the network in a first-2 time resource within the first time resource and second frequency resources within the second time resource.

Meanwhile, in a TDD carrier of the legacy NR, a base station performs only an operation for one of downlink or uplink in a specific time resource. In this case, in a time resource in which an SSB is transmitted, the base station always operates in downlink.

In a case of a UE operating in the legacy TDD, the following is assumed for symbols in which an SSB (SS/PBCH) is transmitted.

1) An SS/PBCH transmission symbol may not be configured as uplink by a TDD configuration (e.g., 'TDD-UL-DL-ConfigCommon' and/or 'TDD-UL-DL-ConfigDedicated').

2) The SS/PBCH transmission symbol may not be configured as uplink in SFI (slot format indication) by a DCI format 2_0.

3) When an SS/PBCH is transmitted in a symbol configured as flexible by a TDD configuration (e.g., 'TDD-UL-DL-ConfigCommon' and/or 'TDD-UL-DL-ConfigDedicated'), when uplink transmission of the UE overlaps the SS/PBCH symbol, the uplink transmission is not performed. In a case of an SRS, when the SRS overlaps the SS/PBCH symbol in a flexible symbol, SRS transmission is not performed in the overlapped symbol(s).

Meanwhile, in FD such as SBFD and SSFD, both DL resources and UL resources may exist in the same time resource from a cell perspective. Accordingly, the base station may perform uplink reception while performing downlink transmission. Therefore, even when an SS/PBCH is transmitted in a time resource in which a cell performs an FD operation, the base station may perform uplink reception while transmitting the SS/PBCH.

Meanwhile, in the current standard specification, the UE is unable to perform uplink transmission in a symbol resource in which the SS/PBCH is transmitted. That is, in an SS/PBCH transmission time resource of the base station, the UE is unable to perform the FD operation.

When a specific time resource is configured as a time resource operating in SBFD (SBFD symbol), both DL and UL resources may exist in that time resource. In this case, if there is no UL signal for the base station to receive in that time resource, the base station may only perform DL transmissions. In SBFD resources, DL transmission is only within the DL subband. Therefore, even if there is no UL signal transmitted in the UL subband, DL transmission may only be performed within the DL subband.

In this case, if the base station has no UL transmissions to receive, even if the specific time resource is a resource determined to be SBFD symbol, it may consider performing DL transmissions outside the DL subband as well as in the DL subband to improve DL throughput. That is, it may consider performing DL transmissions in the full band.

That is, in resources determined to be SBFD symbol, it may consider a fallback to TDD operation where DL or UL operation is performed over the full band, rather than SBFD operation over DL/UL subbands.

In the present disclosure, description is provided assuming an SBFD operation in which a cell simultaneously performs DL and UL by using different frequency resources (e.g., subbands) in the same time resource. However, the disclosure of the present disclosure may be applied even when the cell performs an SSFD operation.

In a wireless communication system, i) a base station may perform a full duplex operation and a UE may perform a half duplex operation, or ii) the base station may perform the half duplex operation and the UE may perform the full duplex operation. Alternatively, iii) both the base station and the UE may support the full duplex operation.

A UE knowing that the base station is capable of performing the full duplex operation may be referred to hereinafter as an FD-aware UE. A UE knowing that the base station is capable of performing an SBFD operation may be referred to hereinafter as an SBFD-aware UE. A UE knowing that the base station is capable of performing an SSFD operation may be referred to hereinafter as an SSFD-aware UE.

When the base station supports both performing the half duplex operation and performing the full duplex operation, the base station may inform the UE of information regarding resources (time and/or frequency) in which half duplex and full duplex may be performed (or are expected to be performed, or are to be performed).

When the base station is a full duplex base station capable of performing an SSFD operation, UL reception may be simultaneously possible in some and/or all frequency resources in which DL transmission of the base station is possible. That is, in some frequency resources, not only DL transmission/reception but also UL reception/transmission may be possible. In this case, information regarding frequency resources in which SSFD is possible may be delivered to the UE. Also, information regarding time resources in which SSFD is possible may be delivered to the UE.

In a case of a full duplex UE, UL transmission may be simultaneously possible in some and/or all frequency resources in which DL reception of the UE is possible. In the present disclosure, a UE performing a half duplex operation may be referred to as an HD UE, and a UE capable of performing (or performing) a full duplex operation may be referred to as an FD UE.

When the base station performs a full duplex operation such as SBFD and SSFD, the base station may perform an SSFD operation and/or an SBFD operation only for some time/frequency resources. When an SBFD-aware UE and/or an SSFD-aware UE knows time/frequency resources in which the cell performs the SSFD operation and/or the SBFD operation, the UE may perform operations differently according to resources in which the cell operates in half duplex (HD), resources in which the cell operates in SBFD, and resources in which the cell operates in SSFD. For example, the UE may perform transmission and reception by determining, differently according to HD resources, SBFD resources, and SSFD resources, time/frequency resources in which the UE performs reception of a DL signal/channel and/or transmission of an UL signal/channel.

The base station may perform a half duplex operation in which only one of DL transmission or UL reception is performed in all frequency resources constituting the cell in time resources operating in HD, and may perform a full duplex operation in which DL transmission is performed through first frequency resources (i.e., DL subband resources) within frequency resources constituting the cell and, simultaneously, UL reception is performed through second frequency resources (i.e., UL subband resources) within the frequency resources constituting the cell in time resources operating in SBFD and SSFD.

For this purpose, the base station determines time resources corresponding to a first time resource (i.e., an HD symbol) and a second time resource (i.e., an FD symbol), and transmits, to the UE, configuration information regarding the first time resource (i.e., the HD symbol) and/or the second time resource (i.e., the FD symbol). The FD symbol may include both an SBFD symbol and an SSFD symbol. More specifically, the base station may determine/determine time resources corresponding to the HD symbol, the SBFD symbol, and/or the SSFD symbol, and may transmit, to the UE, configuration information regarding the HD symbol, the SBFD symbol, and/or the SSFD symbol.

In this case, DL subband resources and/or UL subband resources may be configured differently in time resources operating in SBFD and time resources operating in SSFD. In time resources operating in SBFD, DL subband resources and UL subband resources are configured to not overlap each other. In contrast, in time resources operating in SSFD, DL subband resources and UL subband resources may be configured to overlap each other. The DL subband/UL subband resources may be configured with some frequency resources of a system bandwidth or may be configured with all frequency resources.

The UE receives configuration information regarding the HD symbol, the SBFD symbol, and/or the SSFD symbol from the network, and determines positions of the HD symbol, the SBFD symbol, and/or the SSFD symbol. In this case, in the HD symbol, the UE performs DL reception (UL transmission) through all frequency resources configured for the UE to operate DL reception (UL transmission). Also, in the SBFD symbol and/or the SSFD symbol, the UE performs DL reception (UL transmission) through DL subband resources (UL subband resources) that are the same as or limited (smaller) than frequency resources in which the UE performs DL reception (UL transmission) in the HD symbol. In this case, even when frequency resources not corresponding to the DL subband resources (UL subband resources) are configured for DL reception (UL transmission) in the SBFD symbol and/or the SSFD symbol resources, the UE does not perform DL reception (UL transmission) in frequency resources not corresponding to the DL subband resources (UL subband resources).

Based on the above discussion, the present disclosure proposes a method of differently adjusting an MCS (modulation and coding scheme) applied for transmission and reception of a specific channel (e.g., a PDSCH/PUSCH) in resources operating in full duplex (FD) and resources operating in half duplex (HD) in an intra-carrier full duplex operation in a carrier.

Hereinafter, the network may be interpreted as being replaced with a base station, a gNB, or a CU/DU. Also, a UE may be interpreted as being replaced with an MT (mobile terminal, mobile termination) of an IAB node.

In time/frequency resources operating in full duplex (FD), a channel environment may be worse than in resources operating in half duplex (HD) due to cross-link interference (CLI) and self-interference (SI). Therefore, based on indicating and determining an MCS applied to PDSCH/PUSCH transmission and reception based on a channel environment in resources operating in HD, PDSCH/PUSCH transmission/reception may not be properly performed.

A PDSCH/PUSCH carrying one transport block (TB) may be transmitted, for example, across FD resources and HD resources as follows.

1) A PDSCH/PUSCH may be transmitted and received across frequency resources operating in HD and frequency resources operating in FD within a specific slot.

2) A PDSCH/PUSCH may be transmitted and received across time (symbol) resources operating in HD and time (symbol) resources operating in FD within a specific slot.

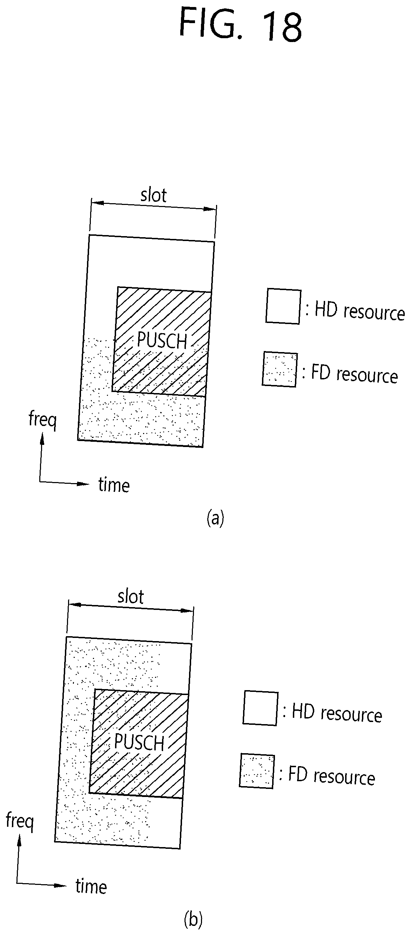

FIG. 18 illustrates examples in which a PUSCH is transmitted across FD resources and HD resources.

Referring to FIG. 18(a), for the same time, a PUSCH may be transmitted, in terms of frequency resources, across frequency resources operating in HD (HD resources) and frequency resources operating in FD (FD resources). Here, the frequency resources may mean PRB resources or RB group resources.

Referring to FIG. 18(b), for the same frequency, a PUSCH may be transmitted, in terms of time resources, across symbol resources operating in HD and symbol resources operating in FD.

Meanwhile, a PDSCH/PUSCH carrying one transport block (TB) may be transmitted across FD resources and HD resources also in, for example, the following situations.

3) A PDSCH/PUSCH may be transmitted by being repeated across a slot operating in HD and a slot operating in FD.

4) TB processing over multiple slots (TBoMS) may be transmitted across a slot operating in HD and a slot operating in FD.

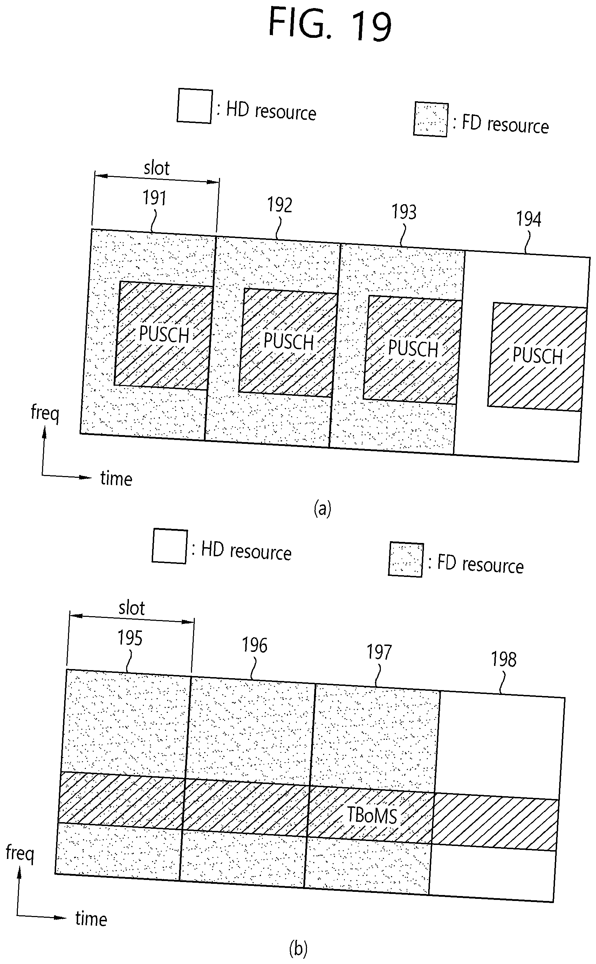

FIG. 19 illustrates other examples in which a PUSCH is transmitted across FD resources and HD resources.

FIG. 19(a) illustrates an example of a PUSCH repeatedly transmitted across slots (191, 192, 193) operating in FD and a slot (194) operating in HD.

FIG. 19(b) illustrates an example of TBoMS transmitted across slots (195, 196, 197) operating in FD and a slot (198) operating in HD.

For convenience of description, the disclosure of the present disclosure is described based on a case where a UE transmits a PUSCH. However, the disclosure of the present disclosure may be extended/applied even to a case where the UE receives a PDSCH.

<Proposal 1>

Proposal 1 proposes, in transmission of a data channel (e.g., a PDSCH/PUSCH) carrying a specific TB, to apply different MCS for each unit resource in which the PDSCH/PUSCH is transmitted, based on whether a resource in which the PDSCH/PUSCH is transmitted is an FD resource or an HD resource.

In this case, an FD resource may mean a resource in which DL transmission and UL reception can be simultaneously performed from a cell perspective, and an HD resource may mean a resource in which only one of DL transmission or UL reception can be performed from the cell perspective. Such resources may mean time resources such as symbols and slots, and/or may mean frequency resources such as RBs and RB groups (RBG).

In this case, a unit to which different MCS is applied may be a unit of a time resource such as a symbol or a slot, and/or may be a unit of a frequency resource such as an RB or an RB group.

For example, as in FIG. 18(a), based on the UE transmitting a PUSCH, within one slot, across RBs operating in FD and RBs operating in HD, the UE may apply different MCS for PUSCH transmission in an RB operating in FD and an RB operating in HD.

As in FIG. 18(b), based on the UE transmitting a PUSCH, within one slot, across symbols operating in FD and symbols operating in HD, the UE may apply different MCS for PUSCH transmission in a symbol operating in FD and a symbol operating in HD.

As in FIG. 19(a), based on the UE transmitting a PUSCH by repetition across multiple slots (191, 192, 193, 194), the UE may apply different MCS for PUSCH transmission in slots (191, 192, 193) operating in FD and a slot (194) operating in HD.

As in FIG. 19(b), based on the UE transmitting TBoMS across multiple slots (195, 196, 197, 198), the UE may apply different MCS for TBoMS transmission in slots (195, 196, 197) operating in FD and a slot (198) operating in HD.

As described above, when applying different MCS, specifically, a method proposed in an 'MCS adjustment method' described later may be applied.

Through the disclosure of the present proposal, the UE may operate, for example, as follows.

When the 'MCS adjustment method' is applied, the UE may be instructed, by the base station, for PUSCH transmission through RRC, MAC CE, and/or DCI signaling. For example, the UE may receive, from the base station, DCI scheduling a PUSCH.

For the instructed PUSCH transmission, the UE determines, by applying the method proposed in the present disclosure, a modulation order applied to FD resources and a modulation order applied to HD resources, respectively.

The UE transmits the PUSCH by applying the modulation order applied to FD resources in FD resources, and transmits the PUSCH by applying the modulation order applied to HD resources in HD resources.

<Proposal 2>

Proposal 2 proposes, for transmission of a PDSCH/PUSCH carrying a specific TB, to apply different MCS for each unit resource in which the PDSCH/PUSCH is transmitted, based on whether the UE operates in FD or HD in the resource in which the PDSCH/PUSCH is transmitted.

A resource in which the UE operates in FD may mean a resource in which the UE can operate in FD (i.e., a resource in which the UE can simultaneously perform DL reception and UL transmission), and a resource in which the UE operates in HD may mean a resource in which the UE can operate only in HD (i.e., a resource in which the UE can perform only one of DL reception and UL transmission).

Alternatively, a resource in which the UE operates in FD may mean a resource in which the UE actually performs DL reception and UL transmission simultaneously, and a resource in which the UE operates in HD may mean a resource in which the UE actually performs only one of DL reception and UL transmission. In this case, even when a resource is configured as a resource in which the UE can operate in FD, based on the UE performing only DL reception or only UL transmission, the resource becomes a resource in which the UE operates in HD.

Such resources may mean time resources such as symbols and slots, and/or may mean frequency resources such as RBs and RB groups.

In this case, a unit to which different MCS is applied may be a time resource such as a symbol or a slot, and/or may be a unit of a frequency resource such as an RB or an RB group.

When the UE transmits a PUSCH, within one slot, across RBs in which the UE operates in FD and RBs in which the UE operates in HD, the UE may apply different MCS for PUSCH transmission in an RB in which the UE operates in FD and an RB in which the UE operates in HD.

When the UE transmits a PUSCH, within one slot, across symbols in which the UE operates in FD and symbols in which the UE operates in HD, the UE may apply different MCS for PUSCH transmission in a symbol in which the UE operates in FD and a symbol in which the UE operates in HD.

When the UE transmits a PUSCH by repetition across a slot in which the UE operates in FD and a slot in which the UE operates in HD, the UE may apply different MCS for PUSCH transmission in the slot in which the UE operates in FD and the slot in which the UE operates in HD.

When the UE transmits TBoMS across a slot in which the UE operates in FD and a slot in which the UE operates in HD, the UE may apply different MCS for TBoMS transmission in the slot in which the UE operates in FD and the slot in which the UE operates in HD.

In this case, to apply different MCS, a method proposed in the 'MCS adjustment method' described below may be applied.

Through the disclosure of the present proposal, the UE may operate, for example, as follows.

When the 'MCS adjustment method' is applied, the UE is instructed/scheduled, by the base station, for PUSCH transmission through RRC, MAC CE, and/or DCI signaling.

For the instructed PUSCH transmission, the UE determines, by applying the method proposed in the present disclosure, a modulation order applied in FD resources and a modulation order applied in HD resources, respectively.

For the instructed PUSCH transmission, the UE determines, by applying the method proposed in the present disclosure, a TBS of a TB transmitted through the PUSCH.

For a TB generated to match the TBS, the UE transmits the PUSCH by applying the modulation order applied to FD resources in resources in which the UE operates in FD, and transmits the PUSCH by applying the modulation order applied to HD resources in resources in which the UE operates in HD.

<MCS adjustment method>

1. Modulation order determination method

When the UE performs transmission and reception of a PUSCH/PDSCH, in a case where the PUSCH/PDSCH is transmitted in FD resources and in a case where the PUSCH/PDSCH is transmitted in HD resources, different modulation orders ($Q_m$) may be applied in the respective resources.

That is, in order to apply different MCSs based on resources in which a PUSCH is transmitted as in Proposal 1 or Proposal 2, the UE may apply different modulation orders for PUSCH transmission.

Table 4-1 below illustrates example values of an MCS index ($I_{MCS}$) applied to PUSCH transmission. The MCS index ($I_{MCS}$) may be instructed by the network or may be determined based on a specific criterion. For example, based on a value of a specific field in DCI, a specific MCS index in Table 4-1 below may be instructed.

When the MCS index is determined, a modulation order ($Q_m$) corresponding to the MCS index may be determined based on Table 4-1 below. For PUSCH transmission, the UE performs modulation for bits to be transmitted by applying the modulation order determined as described above.

[Table 4-1]

| MCS index $I_{MCS}$ | Modulation Order $Q_m$ | Target code Rate R x 1024 | Spectral Efficiency |
|---|---|---|---|
| 0 | q | 240/ q | 0.2344 |
| 1 | q | 314/ q | 0.3066 |
| 2 | 2 | 193 | 0.3770 |
| 3 | 2 | 251 | 0.4902 |
| 4 | 2 | 308 | 0.6016 |
| 5 | 2 | 379 | 0.7402 |
| 6 | 2 | 449 | 0.8770 |
| 7 | 2 | 526 | 1.0273 |
| 8 | 2 | 602 | 1.1758 |
| 9 | 2 | 679 | 1.3262 |

(continued)

| MCS index $I_{MCS}$ | Modulation Order $Q_m$ | Target code Rate R x 1024 | Spectral Efficiency |
|---|---|---|---|
| 10 | 4 | 340 | 1.3281 |
| 11 | 4 | 378 | 1.4766 |
| 12 | 4 | 434 | 1.6953 |
| 13 | 4 | 490 | 1.9141 |
| 14 | 4 | 553 | 2.1602 |
| 15 | 4 | 616 | 2.4063 |
| 16 | 4 | 658 | 2.5703 |
| 17 | 6 | 466 | 2.7305 |
| 18 | 6 | 517 | 3.0293 |
| 19 | 6 | 567 | 3.3223 |
| 20 | 6 | 616 | 3.6094 |
| 21 | 6 | 666 | 3.9023 |
| 22 | 6 | 719 | 4.2129 |
| 23 | 6 | 772 | 4.5234 |
| 24 | 6 | 822 | 4.8164 |
| 25 | 6 | 873 | 5.1152 |
| 26 | 6 | 910 | 5.3320 |
| 27 | 6 | 948 | 5.5547 |
| 28 | q | reserved | |
| 29 | 2 | reserved | |
| 30 | 4 | reserved | |
| 31 | 6 | reserved | |

In order to differently determine a modulation order applied to FD resources and a modulation order applied to HD resources, at least one of the following methods (Alt 1 to Alt 3) may be applied.

Alt 1.

An MCS index applied to FD resources and an MCS index applied to HD resources may be independently indicated. In this case, the UE may be independently instructed, from the network, for an MCS index to be applied to PUSCH transmission for FD resources and HD resources through RRC, MAC CE, and/or DCI signaling. That is, the UE is instructed for an MCS index for FD resources and an MCS index for HD resources separately. In other words, the UE receives two MCS indices from the network, and uses one as an MCS index for FD resources and the other as an MCS index for HD resources.
For example, the UE determines a corresponding first modulation order from a first MCS index instructed to be applied to HD resources, and determines the first modulation order as a modulation order applied to HD resources. Also, the UE determines a corresponding second modulation order from a second MCS index instructed to be applied to FD resources, and determines the second modulation order as a modulation order applied to FD resources.

Alt 2.

In addition to a legacy signaling method, a modulation order applied to FD resources may be additionally indicated. In this case, in addition to an MCS index previously instructed, the UE may be instructed, from the network, for a modulation order to be applied to PUSCH transmission in FD resources through RRC, MAC CE, and/or DCI signaling.
That is, in Alt 2, the UE receives only one MCS index, and determines a modulation order determined based on the MCS index as a modulation order for HD resources. Also, the UE is instructed for a modulation order for FD resources.

This is different from Alt 1 in which the UE receives two MCS indices.

In other words, the UE determines a corresponding first modulation order from an MCS index previously instructed, and determines the first modulation order as a modulation order applied to HD resources. The UE determines a second modulation order additionally instructed as a modulation order applied to FD resources.

Alternatively, a modulation order applied to HD resources may be additionally indicated. In this case, in addition to an MCS index previously instructed, the UE may be instructed, from the network, for a modulation order to be applied to PUSCH transmission in HD resources through RRC, MAC CE, and/or DCI signaling. The UE determines a corresponding first modulation order from an MCS index previously instructed, and determines the first modulation order as a modulation order applied to FD resources. The UE determines a second modulation order additionally instructed as a modulation order applied to HD resources.

Alt 3.

Alt 3 is a method in which the UE receives only one MCS index to determine a modulation order for HD resources, and determines a modulation order applied to FD resources according to a specific rule or calculation. That is, the UE determines a modulation order for HD resources by using an MCS index previously instructed, and determines a modulation order for FD resources by using the MCS index and/or additional information.

Alt 2 and Alt 3 have in common that the UE receives only one MCS index. However, in Alt 2, a modulation order for FD resources is directly provided, whereas in Alt 3, a modulation order for FD resources is not directly provided and is obtained by applying a specific rule or calculation to a modulation order for HD resources.

The UE determines a corresponding first modulation order from an existing MCS index, and determines the first modulation order as a modulation order applied to HD resources. Thereafter, the UE may determine a modulation order applied to FD resources based on at least one of the following methods.

Alt 3-1. When a modulation order corresponding to an instructed MCS index is $Q_m$, the UE determines $Q_m \times \alpha$ (alpha) as a modulation order applied to FD resources. In this case, alpha may have a value of 1 or 1/2n. In this case, n may be a positive integer. Alpha may be, for example, 1/2. Here, "$\times$" indicates multiplication.

Alternatively, alpha may have a value of 1 or 2n. In this case, n may be a positive integer. Alpha may be 2.

Alternatively, alpha may be a value instructed by the network through RRC, MAC CE, DCI signaling, or the like.

Alt 3-2. When a modulation order corresponding to an instructed MCS index is $Q_m$, the UE determines $Q_m + \beta$ (beta) as a modulation order applied to FD resources. In this case, beta may have a value of 2n. In this case, n may be 0 or a negative integer. In particular, beta may be -2.

Alternatively, beta may have a value of 2n. In this case, n may be 0 or a positive integer. In particular, beta may be equal to 2.

Alternatively, beta may be a value instructed by the network through RRC, MAC CE, DCI signaling, or the like.

In Alt 3, it is also possible that the UE receives only one MCS index to determine a modulation order for FD resources, and determines a modulation order applied to HD resources according to a specific rule or calculation. That is, the UE may receive only one MCS index to determine a modulation order for FD resources, and determine a modulation order applied to HD resources by applying a specific rule and calculation to the modulation order for FD resources. It may be expressed that the UE determines a modulation order to be applied to PUSCH transmission in HD resources by using the MCS index previously instructed and/or additional information. The UE determines a corresponding first modulation order from an existing MCS index, and determines the first modulation order as a modulation order applied to FD resources. The UE may determine a second modulation order applied to HD resources rather than FD resources by using the methods of Alt 3-1 and Alt 3-2.

2. TB size determination method

Hereinafter, a method of determining a TBS is described in a situation in which PUSCH transmission may be transmitted across different types of resources, that is, HD resources and FD resources.

First, a method of determining a transport block (TB) size (TBS) is described in a case where PUSCH transmission resources are composed only of HD resources.

A TBS for PUSCH transmission may be determined based on a number of allocated PRBs (physical resource blocks).

In order to determine the TBS, the UE determines a number of resource elements (REs) ($N_{RE}$, which may be referred to as a total number of REs allocated to the PUSCH) within a slot.

To this end, the UE first determines the number of REs ($N'_{RE}$) allocated to PUSCH within one PRB as follows.

[Equation 1]

$$N'_{RE} = N^{RB}_{sc} \cdot N^{sh}_{symb} - N^{PRB}_{DMRS} - N^{PRB}_{oh}$$

In Equation 1, $N^{RB}_{sc}$ = 12, which is the number of subcarriers in the frequency domain of a physical resource block (PRB).

$N^{sh}_{symb}$ is the number of symbols L of the PUSCH allocation.

$N^{PRB}_{DMRS}$ is the number of REs for DM-RS per PRB in the allocated duration including the overhead of the DM-RS CDM groups without data.

$N^{PRB}_{oh}$ is an overhead configured by the higher layer parameter xOverhead of PUSCH-ServingCellConfig. If $N^{PRB}_{oh}$ is not configured, $N^{PRB}_{oh}$ is considered 0.

The UE may determine the total number of REs ($N_{RE}$) allocated to PUSCH as follows.

For TBoMS, $N_{RE}$ = N * min (156, $N'_{RE}$) · $n_{PRB}$, where $n_{PRB}$ is the total number of PRBs allocated to the UE and N is the number of slots used for TBS determination as indicated by 'numberOfSlotsTBoMS'. Otherwise, $N_{RE}$ = min (156, $N'_{RE}$) · nPRB.

The UE may obtain an unquantized intermediate variable ($N_{info}$) based on the $N_{RE}$, the modulation order ($Q_m$) determined based on modulation and coding scheme field ($I_{MCS}$), target code rate (R), number of layers (v), etc., and then determine the TBS based on the quantized intermediate number of information bits ($N'_{info}$) obtained according to the value of $N_{info}$.

For example, $N_{info}$ can be obtained by the following equation.

[Equation 1-1]

$$N_{info} = N_{RE} \cdot R \cdot Q_m \cdot v$$

If $N_{info}$ is less than or equal to a certain value (e.g., 3824), the quantized intermediate number of information bits $N'_{info}$ can be obtained as follows.

[Equation 1-2]

$$N'_{info} = max\left(24, 2^n \cdot \left\lfloor \frac{N_{info}}{2^n} \right\rfloor\right) \text{ where } n = max(3, \lfloor log_2(N_{info}) \rfloor - 6)$$

After that, find the closest TBS that is not less than $N'_{info}$ in the table below.

[Table 5]

| Index | TBS | Index | TBS | Index | TBS | Index | TBS |
|-------|-----|-------|-----|-------|------|-------|------|
| 1 | 24 | 31 | 336 | 61 | 1288 | 91 | 3624 |
| 2 | 32 | 32 | 352 | 62 | 1320 | 92 | 3752 |
| 3 | 40 | 33 | 368 | 63 | 1352 | 93 | 3824 |
| 4 | 48 | 34 | 384 | 64 | 1416 | | |
| 5 | 56 | 35 | 408 | 65 | 1480 | | |
| 6 | 64 | 36 | 432 | 66 | 1544 | | |
| 7 | 72 | 37 | 456 | 67 | 1608 | | |
| 8 | 80 | 38 | 480 | 68 | 1672 | | |
| 9 | 88 | 39 | 504 | 69 | 1736 | | |
| 10 | 96 | 40 | 528 | 70 | 1800 | | |
| 11 | 104 | 41 | 552 | 71 | 1864 | | |
| 12 | 112 | 42 | 576 | 72 | 1928 | | |
| 13 | 120 | 43 | 608 | 73 | 2024 | | |
| 14 | 128 | 44 | 640 | 74 | 2088 | | |
| 15 | 136 | 45 | 672 | 75 | 2152 | | |
| 16 | 144 | 46 | 704 | 76 | 2216 | | |

(continued)

| Index | TBS | Index | TBS | Index | TBS | Index | TBS |
|---|---|---|---|---|---|---|---|
| 17 | 152 | 47 | 736 | 77 | 2280 | | |
| 18 | 160 | 48 | 768 | 78 | 2408 | | |
| 19 | 168 | 49 | 808 | 79 | 2472 | | |
| 20 | 176 | 50 | 848 | 80 | 2536 | | |
| 21 | 184 | 51 | 888 | 81 | 2600 | | |
| 22 | 192 | 52 | 928 | 82 | 2664 | | |
| 23 | 208 | 53 | 984 | 83 | 2728 | | |
| 24 | 224 | 54 | 1032 | 84 | 2792 | | |
| 25 | 240 | 55 | 1064 | 85 | 2856 | | |
| 26 | 256 | 56 | 1128 | 86 | 2976 | | |
| 27 | 272 | 57 | 1160 | 87 | 3104 | | |
| 28 | 288 | 58 | 1192 | 88 | 3240 | | |
| 29 | 304 | 59 | 1224 | 89 | 3368 | | |
| 30 | 320 | 60 | 1256 | 90 | 3496 | | |

If $N_{info}$ is greater than a certain value (e.g., 3824), the quantized intermediate number of information bits $N'_{info}$ can be obtained as follows.

[Equation 1-3]

$$N'_{info} = max\left(3840, 2^n \times round\left(\frac{N_{info}-24}{2^n}\right)\right) \text{ where } n = \lfloor log_2(N_{info} - 24)\rfloor - 5$$

At this time, TBS can be determined as shown in Table 6 below according to the target code rate R and the value of $N'_{info}$.

[Table 6]

if $R \leq 1/4$

$$TBS = 8 \cdot C \cdot \left\lceil\frac{N'_{info}+24}{8 \cdot C}\right\rceil - 24, \text{ where } C = \left\lceil\frac{N'_{info}+24}{3816}\right\rceil$$

else

if $N'_{info} > 8424$

$$TBS = 8 \cdot C \cdot \left\lceil\frac{N'_{info}+24}{8 \cdot C}\right\rceil - 24, \text{ where } C = \left\lceil\frac{N'_{info}+24}{8424}\right\rceil$$

else

$$TBS = 8 \cdot \left\lceil\frac{N'_{info} + 24}{8}\right\rceil - 24$$

end if

As described above, in order for the UE to determine a TB size (TBS) applied to PUSCH (or PDSCH of a base station) transmission, a value of an unquantized intermediate variable ($N_{info}$) needs to be obtained. For example, $N_{info}$ may be obtained as $N_{info} = N_{RE} \cdot R \cdot Q_m \cdot v$. As described above, $N_{RE}$ is a total number of REs allocated to the PUSCH, R is a target code rate, $Q_m$ is a modulation order, and v is the number of layers.

That is, the UE obtains a final TB size by using the Ninfo. In a process of obtaining the $N_{info}$, a modulation order

($Q_m$) and a target code rate (R) are required, and the modulation order ($Q_m$) and the target code rate (R) may be identified based on an MCS index. That is, a $Q_m$ value and an R value corresponding to the MCS index may be obtained.

However, when the UE independently determines a modulation order applied to FD resources and HD resources for PUSCH transmission, ambiguity may occur in determining a $Q_m$ value and an R value applied by the UE for calculation of an $N_{info}$ value for determining a TBS of a TB transmitted through the PUSCH. Hereinafter, a method of determining a TB size by the UE is described in consideration of such matters.

Alt a.

The UE determines values of $Q_m$ and R used for calculation of an $N_{info}$ value for TB size determination based on an MCS index ($I_{MCS}$) instructed from the network. That is, values of R and $Q_m$ in $N_{info} = N_{RE} \cdot R \cdot Q_m \cdot v$ may be values determined from an MCS index instructed for PUSCH transmission from the network.

Such a method may be applied when the UE is instructed for only one MCS index from the network. For example, the method may be applied when the UE applies a method such as the above-described Alt 2 or Alt 3 in order to determine modulation orders applied to FD resources and HD resources.

Alt b.

The UE determines values of $Q_m$ and R used for calculation of an $N_{info}$ value for TB size (TBS) determination based on an MCS index applied to HD resources. That is, values of R and $Q_m$ in $N_{info} = N_{RE} \cdot R \cdot Q_m \cdot v$ may be values determined from an MCS index instructed, from the network, for transmission of a PUSCH in HD resources.

Alternatively, the UE may determine values of $Q_m$ and R used for calculation of an $N_{info}$ value for TB size determination based on an MCS index applied to FD resources. That is, values of R and $Q_m$ in $N_{info} = N_{RE} \cdot R \cdot Q_m \cdot v$ may be values determined from an MCS index instructed, from the network, for transmission of a PUSCH in FD resources.

Such a method may be applied when the UE is independently instructed, from the network, for an MCS index applied to HD resources and an MCS index applied to FD resources. For example, the method may be applied when the UE applies a method such as the above-described Alt 1 in order to determine modulation orders applied to FD resources and HD resources.

Alt c.

The UE obtains $N_{info\_1}$ based on an MCS index applied to HD resources (referred to as a first MCS index), and obtains $N_{info\_2}$ based on an MCS index applied to FD resources (referred to as a second MCS index). That is, values of R and $Q_m$ for calculating $N_{info\_1}$ may be values determined from the first MCS index instructed, from the network, for transmission of a PUSCH in HD resources. Also, values of R and $Q_m$ for calculating $N_{info\_2}$ may be values determined from the second MCS index instructed, from the network, for transmission of a PUSCH in FD resources.

In this case, the UE may determine that a final $N_{info}$ value used for determining the TBS is equal to $w \times N_{info\_1} + (1 - w) \times N_{info\_2}$. Here, "$\times$" indicates multiplication. In this case, a value of w may be in a range of $0 \le w \le 1$ (i.e., w is a value that is greater than or equal to 0 and less than or equal to 1).

For example, the value of w may be equal to 0.5.

Alternatively, the value of w may be a value corresponding to a ratio of HD resources among total resources in which the PUSCH is transmitted.

Alternatively, the value of w may be a value instructed, to the UE, from the network through RRC, MAC CE, and/or DCI signaling.

Such a method may be applied when the UE is independently instructed, from the network, for an MCS index applied to HD resources and an MCS index applied to FD resources. For example, the method may be applied when the UE applies a method such as the above-described Alt 1 in order to determine modulation orders applied to FD resources and HD resources.

Alt d.

The UE calculates an $N_{info}$ value for TB size determination as $N_{info} = N_{RE} \cdot R \cdot Q_m \cdot v$. In this case, an R value may be a value determined from an MCS index instructed, from the network, for transmission of the PUSCH.

A $Q_m$ value may be determined to be equal to $w \times Q_{m\_1} + (1 - w) \times Q_{m\_2}$. Here, "$\times$" indicates multiplication. In this case, a value of w may be in a range of $0 \le w \le 1$ (i.e., w is a value that is greater than or equal to 0 and less than or equal to 1).

For example, the value of w may be equal to 0.5.

Alternatively, the value of w may be a value corresponding to a ratio of HD resources among total resources in which the PUSCH is transmitted.

Alternatively, the value of w may be a value instructed, to the UE, from the network through RRC, MAC CE, and/or DCI signaling.

Such a method may be applied when the UE is instructed, from the network, for only one MCS index. For example, the method may be applied when the UE applies a method such as the above-described Alt 2 or Alt 3 in order to determine modulation orders applied to FD resources and HD resources.

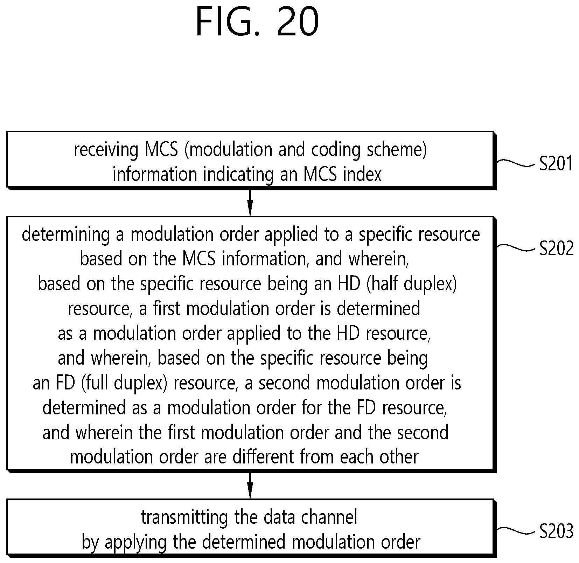

FIG. 20 illustrates an operation method of a UE in a wireless communication system.

Referring to FIG. 20, the UE receives MCS (modulation and coding scheme) information indicating an MCS index (S201).

For example, the MCS information may be received through downlink control information (DCI). For example, a specific MCS index in a predetermined or configured MCS index table may be indicated through a specific field (e.g., a 'modulation and coding scheme' field) of a DCI format (DCI format 0_0, DCI format 0_1, DCI format 0_2, or DCI format 0_3) used for scheduling of a PUSCH.

For example, the MCS information may independently indicate a first MCS index for the HD resources and a second MCS index for the FD resources. This has been described above in the method of Alt 1.

According to an embodiment, the MCS information may indicate only one MCS index. In this case, the UE may determine a first modulation order based on the one MCS index, and may determine a second modulation order based on the one MCS index and additional information. This has been described above in Alt 2 and Alt 3. In this case, the additional information may correspond to 1) information on a modulation order applied to FD resources in Alt 2, and 2) alpha and beta described in Alt 3-1 and Alt 3-2.

The UE determines a modulation order applied to a specific resource based on the MCS information, and wherein, based on the specific resource being an HD (half duplex) resource, a first modulation order is determined as a modulation order applied to the HD resource, and wherein, based on the specific resource being an FD (full duplex) resource, a second modulation order is determined as a modulation order for the FD resource, and wherein the first modulation order and the second modulation order are different from each other (S202).

For example, the first modulation order may be determined based on the MCS index indicated by the MCS information, and the second modulation order may be determined based on the MCS index and the additional information.

In this case, the additional information may be a value corresponding to a ratio of the HD resources among total resources of the data channel (e.g., the above-described w).

According to an embodiment, the additional information is a value multiplied by the first modulation order to obtain the second modulation order (e.g., the above-described alpha), and may be configured from the network.

Alternatively, the additional information is a value added to the first modulation order to obtain the second modulation order (e.g., the above-described beta), and may be configured from the network.

The UE transmits the data channel by applying the determined modulation order (S203).

For example, the UE may determine a size of a transport block (transport block size (TBS)) transmitted through the data channel based on the first modulation order and the second modulation order, and may transmit, through the data channel (e.g., the PUSCH), a transport block having the TBS. This has been described above in '2. TB size determination method'.

A modulation order used to determine the TBS may be determined based on the first modulation order, the second modulation order, and a value corresponding to a ratio of the HD resources among total resources of the data channel. This has been described above in Alt d.

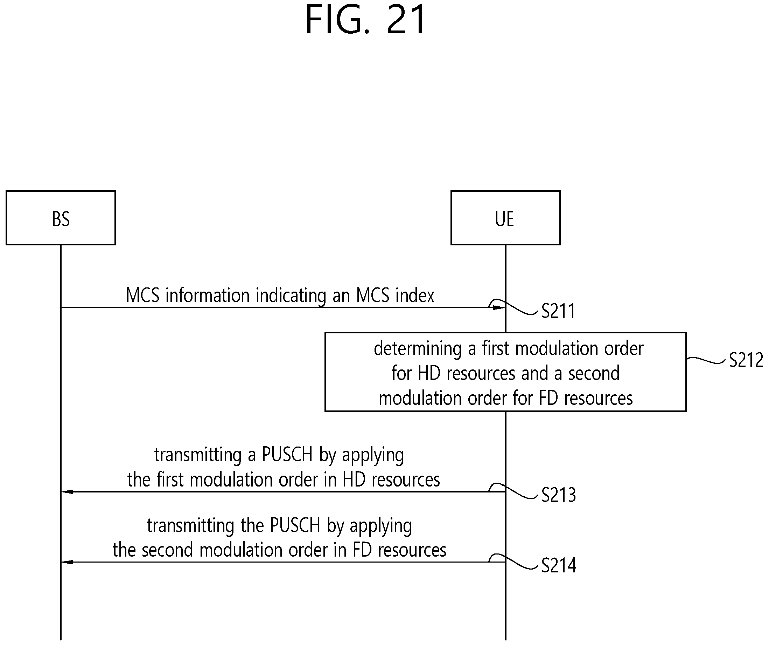

FIG. 21 illustrates the signaling process and operation between a base station and a UE when applying the method of FIG. 20.

The base station provides, to the UE, MCS information indicating an MCS index (S211).

The UE determines a first modulation order for HD resources and a second modulation order for FD resources (S212).

The UE transmits a PUSCH by applying the first modulation order in HD resources (S213), and transmits the PUSCH by applying the second modulation order in FD resources (S214).

According to the method of the present disclosure, when PUSCH transmission is transmitted, in a time domain, across different types of slots, for example, slots in which FD slots and HD slots are mixed, the UE may transmit the PUSCH by applying an appropriate modulation order according to a slot type, thereby improving transmission performance of a transport block.

Also, according to the method of the present disclosure, even when PUSCH transmission is transmitted, in a time domain, across different types of slots, ambiguity in a method of determining a TBS may be prevented.

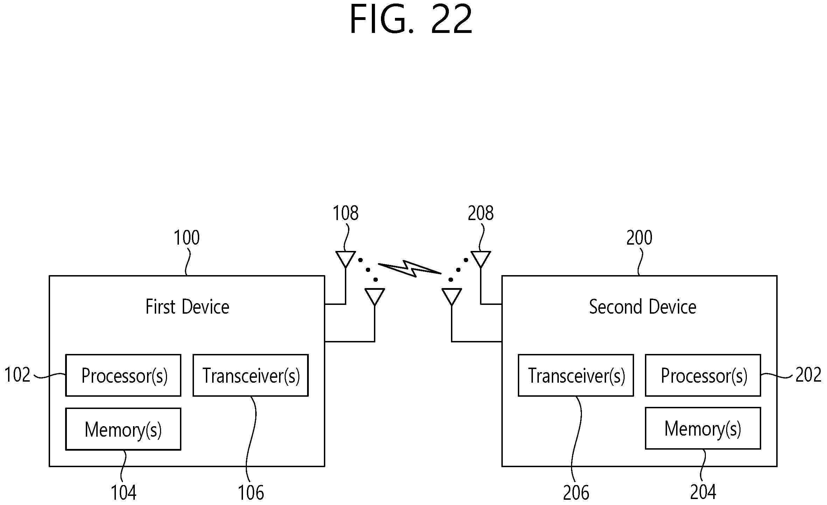

FIG. 22 illustrates a wireless device applicable to the present specification.

Referring to FIG. 22, a first wireless device 100 and a second wireless device 200 may transmit radio signals through a variety of RATs (e.g., LTE and NR).

The first wireless device 100 may include at least one processor 102 and at least one memory 104 and additionally further include at least one transceiver 106 and/or at least one antenna 108. At least one processor 102 (hereinafter simply referred to as a processor) controls at least one memory 104 (hereinafter simply referred to as a memory) and/or at least one transceiver 106 (hereinafter simply referred to as a transceiver), and may be configured to implement the descriptions, functions, procedures, proposals, methods and/or operational flowcharts disclosed in this document. For example, the processors 102 may process information within the memory 104 to generate first information/signals and then transmit radio signals including the first information/signals through the transceivers 106. In addition, the processor 102 may receive radio signals including second information/signals through the transceiver 106 and then store information obtained by processing the second information/signals in the memory 104. The memory 104 may be connected to the processory102 and may store a variety of information related to operations of the processor 102. For example, the memory 104 may store software code including commands for performing a part or the entirety of processes controlled by the processor 102 or for performing the descriptions, functions, procedures, proposals, methods, and/or operational flowcharts disclosed in this document. Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. The transceiver 106 may include a transmitter and/or a receiver. The transceiver 106 may be interchangeably used with a radio frequency (RF) unit. In the present specification, the wireless device may represent a communication modem/circuit/chip.

The processor (102) receives MCS (modulation and coding scheme) information indicating an MCS index, determines, based on the MCS information, a modulation order applied to a specific resource, and transmits a data channel by applying the determined modulation order. In this case, based on the specific resource being an HD (half duplex) resource, the processor (102) determines a first modulation order as a modulation order applied to the HD resource, and, based on the specific resource being an FD (full duplex) resource, the processor (102) determines a second modulation order as a modulation order for the FD resource, wherein the first modulation order and the second modulation order are different from each other. The specific operation has been described with reference to FIGS. 18 to 21.

The second wireless device 200 may include at least one processor 202 and at least one memory 204 and additionally further include at least one transceiver 206 and/or at least one antenna 208. The processor 202 may control the memory 204 and/or the transceiver 206 and may be configured to implement the descriptions, functions, procedures, proposals, methods, and/or operational flowcharts disclosed in this document. For example, the processor 202 may process information within the memory 204 to generate third information/signals and then transmit radio signals including the third information/signals through the transceiver 206. In addition, the processor 202 may receive radio signals including fourth information/signals through the transceiver 206 and then store information obtained by processing the fourth information/signals in the memory 204. The memory 204 may be connected to the processor 202 and may store a variety of information related to operations of the processor 202. For example, the memory 204 may store software code including commands for performing a part or the entirety of processes controlled by the processor 202 or for performing the descriptions, functions, procedures, proposals, methods, and/or operational flowcharts disclosed in this document. Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. The transceiver 206 may include a transmitter and/or a receiver. The transceiver 206 may be interchangeably used with an RF unit. In the present specification, the wireless device may represent a communication modem/circuit/chip.

The processor (202) transmits, to a UE, MCS (modulation and coding scheme) information indicating an MCS index, and receives, in a specific resource, a data channel to which a modulation order based on the MCS information is applied. In this case, based on the specific resource being an HD (half duplex) resource, the processor (202) determines a first modulation order as a modulation order applied to the HD resource, and, based on the specific resource being an FD (full duplex) resource, the processor (202) determines a second modulation order as a modulation order for the FD resource, wherein the first modulation order and the second modulation order are different from each other. The specific operation has been described with reference to FIGS. 18 to 21.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The one or more processors 102 and 202 may be implemented with at least one computer readable medium (CRM) including instructions to be executed by at least one processor.

That is, at least one computer readable medium (CRM) having an instruction to be executed by at least one processor to perform operations includes: receiving MCS (modulation and coding scheme) information indicating an MCS index; determining, based on the MCS information, a modulation order applied to a specific resource; and transmitting a data channel by applying the determined modulation order, wherein, based on the specific resource being an HD (half duplex) resource, a first modulation order is determined as a modulation order applied to the HD resource, and, based on the specific resource being an FD (full duplex) resource, a second modulation order is determined as a modulation order for the FD resource, wherein the first modulation order and the second modulation order are different from each other. The specific operation has been described with reference to FIGS. 18 to 21.

The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. In addition, the one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. In addition, the one or more processors 102 and 202 may perform control so that the one or more transceivers 106 and 206 may receive user data, control information, or radio signals from one or more other devices. In addition, the one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

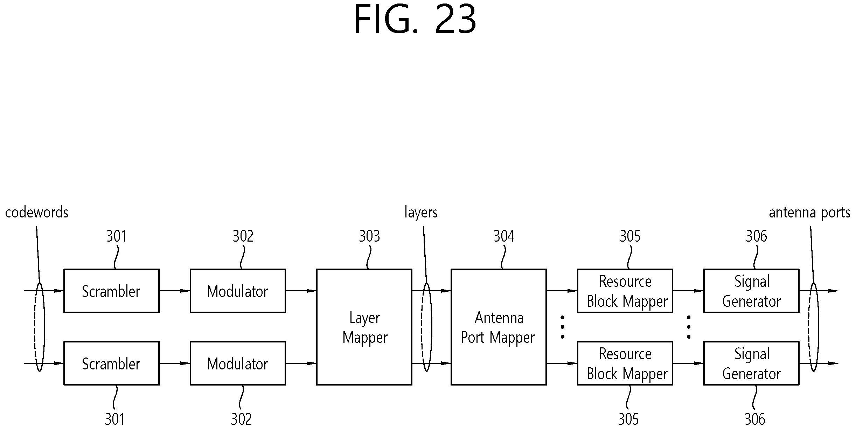

FIG. 23 shows an example of a structure of a signal processing module. Herein, signal processing may be performed in the processors 102 and 202 of FIG. 22.

Referring to FIG. 23, the transmitting device (e.g., a processor, the processor and a memory, or the processor and a transceiver) in a UE or BS may include a scrambler 301, a modulator 302, a layer mapper 303, an antenna port mapper 304, a resource block mapper 305, and a signal generator 306.

The transmitting device can transmit one or more codewords. Coded bits in each codeword are scrambled by the corresponding scrambler 301 and transmitted over a physical channel. A codeword may be referred to as a data string and may be equivalent to a transport block which is a data block provided by the MAC layer.

Scrambled bits are modulated into complex-valued modulation symbols by the corresponding modulator 302. The modulator 302 can modulate the scrambled bits according to a modulation scheme to arrange complex-valued modulation symbols representing positions on a signal constellation. The modulation scheme is not limited and m-PSK (m-Phase Shift Keying) or m-QAM (m-Quadrature Amplitude Modulation) may be used to modulate the coded data. The modulator may be referred to as a modulation mapper.

The complex-valued modulation symbols can be mapped to one or more transport layers by the layer mapper 303. Complex-valued modulation symbols on each layer can be mapped by the antenna port mapper 304 for transmission on an antenna port.

Each resource block mapper 305 can map complex-valued modulation symbols with respect to each antenna port to appropriate resource elements in a virtual resource block allocated for transmission. The resource block mapper can map the virtual resource block to a physical resource block according to an appropriate mapping scheme. The resource block mapper 305 can allocate complex-valued modulation symbols with respect to each antenna port to appropriate subcarriers and multiplex the complex-valued modulation symbols according to a user.

Signal generator 306 can modulate complex-valued modulation symbols with respect to each antenna port, that is, antenna-specific symbols, according to a specific modulation scheme, for example, OFDM (Orthogonal Frequency Division Multiplexing), to generate a complex-valued time domain OFDM symbol signal. The signal generator can perform IFFT (Inverse Fast Fourier Transform) on the antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator may include an IFFT module, a CP inserting unit, a digital-to-analog converter (DAC) and a frequency upconverter.

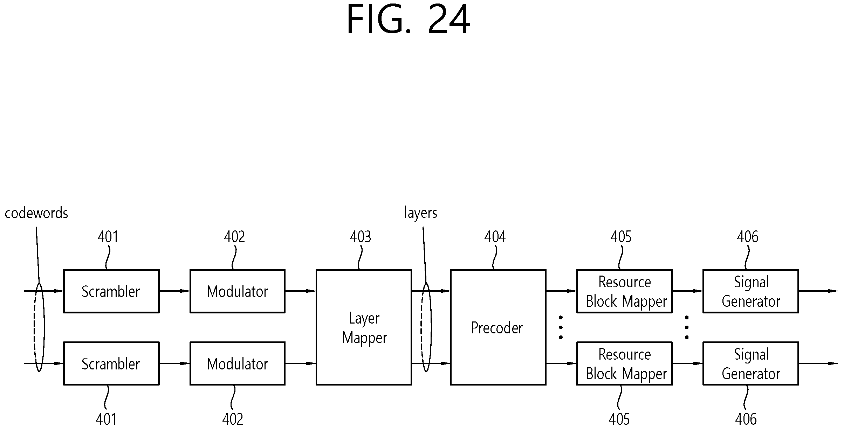

FIG. 24 shows another example of a structure of a signal processing module in a transmitting device. Herein, signal processing may be performed in a processor of a UE/BS, such as the processors 102 and 202 of FIG. 22.

Referring to FIG. 24, the transmitting device (e.g., a processor, the processor and a memory, or the processor and a transceiver) in the UE or the BS may include a scrambler 401, a modulator 402, a layer mapper 403, a precoder 404, a resource block mapper 405, and a signal generator 406.

The transmitting device can scramble coded bits in a codeword by the corresponding scrambler 401 and then transmit the scrambled coded bits through a physical channel.

Scrambled bits are modulated into complex-valued modulation symbols by the corresponding modulator 402. The modulator can modulate the scrambled bits according to a predetermined modulation scheme to arrange complex-valued modulation symbols representing positions on a signal constellation. The modulation scheme is not limited and pi/2-BPSK (pi/2-Binary Phase Shift Keying), m-PSK (m-Phase Shift Keying) or m-QAM (m-Quadrature Amplitude Modulation) may be used to modulate the coded data.

The complex-valued modulation symbols can be mapped to one or more transport layers by the layer mapper 403.

Complex-valued modulation symbols on each layer can be precoded by the precoder 404 for transmission on an antenna port. Here, the precoder may perform transform precoding on the complex-valued modulation symbols and then perform precoding. Alternatively, the precoder may perform precoding without performing transform precoding. The precoder 404 can process the complex-valued modulation symbols according to MIMO using multiple transmission antennas to output antenna-specific symbols and distribute the antenna-specific symbols to the corresponding resource block mapper 405. An output z of the precoder 404 can be obtained by multiplying an output y of the layer mapper 403 by an N x M precoding matrix W. Here, N is the number of antenna ports and M is the number of layers.

Each resource block mapper 405 maps complex-valued modulation symbols with respect to each antenna port to appropriate resource elements in a virtual resource block allocated for transmission.

The resource block mapper 405 can allocate complex-valued modulation symbols to appropriate subcarriers and multiplex the complex-valued modulation symbols according to a user.

Signal generator 406 can modulate complex-valued modulation symbols according to a specific modulation scheme, for example, OFDM, to generate a complex-valued time domain OFDM symbol signal. The signal generator 406 can perform IFFT (Inverse Fast Fourier Transform) on antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator 406 may include an IFFT module, a CP inserting unit, a digital-to-analog converter (DAC) and a frequency upconverter.

The signal processing procedure of the receiving device may be reverse to the signal processing procedure of the transmitting device. Specifically, the processor of the transmitting device decodes and demodulates RF signals received through antenna ports of the transceiver. The receiving device may include a plurality of reception antennas, and signals received through the reception antennas are restored to baseband signals, and then multiplexed and demodulated according to MIMO to be restored to a data string intended to be transmitted by the transmitting device. The receiving device may include a signal restoration unit that restores received signals to baseband signals, a multiplexer for combining and multiplexing received signals, and a channel demodulator for demodulating multiplexed signal strings into corresponding codewords. The signal restoration unit, the multiplexer and the channel demodulator may be configured as an integrated module or independent modules for executing functions thereof. More specifically, the signal restoration unit may include an analog-to-digital converter (ADC) for converting an analog signal into a digital signal, a CP removal unit that removes a CP from the digital signal, an FET module for applying FFT (fast Fourier transform) to the signal from which the CP has been removed to output frequency domain symbols, and a resource element demapper/equalizer for restoring the frequency domain symbols to antenna-specific symbols. The antenna-specific symbols are restored to transport layers by the multiplexer and the transport layers are restored by the channel demodulator to codewords intended to be transmitted by the transmitting device.

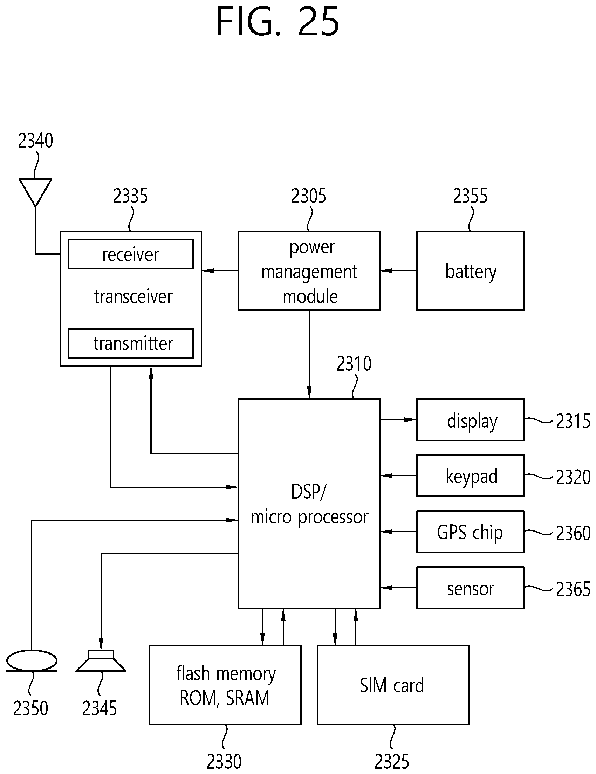

FIG. 25 illustrates an example of a wireless communication device according to an implementation example of the present disclosure.

Referring to FIG. 25, the wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 can implement functions, procedures and methods described in the present description. The processor 2310 in FIG. 25 may be the processors 102 and 202 in FIG. 22.

The memory 2330 is connected to the processor 2310 and stores information related to operations of the processor. The memory may be located inside or outside the processor and connected to the processor through various techniques such as wired connection and wireless connection. The memory 2330 in FIG. 25 may be the memories 104 and 204 in FIG. 22.

A user can input various types of information such as telephone numbers using various techniques such as pressing buttons of the keypad 2320 or activating sound using the microphone 2350. The processor 2310 can receive and process user information and execute an appropriate function such as calling using an input telephone number. In some scenarios, data can be retrieved from the SIM card 2325 or the memory 2330 to execute appropriate functions. In some scenarios, the processor 2310 can display various types of information and data on the display 2315 for user convenience.

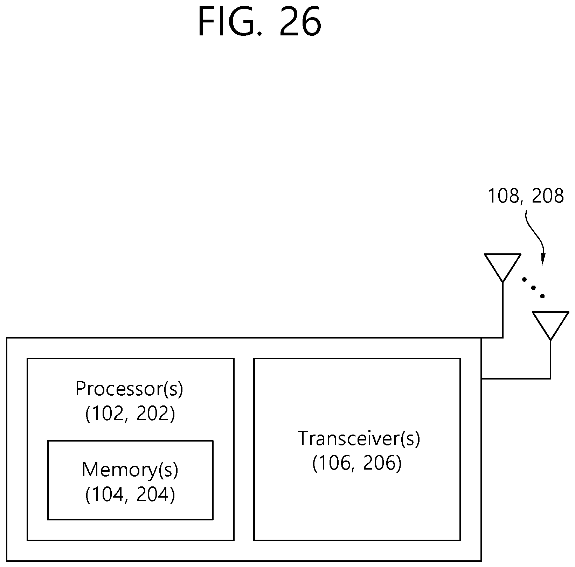

The transceiver 2335 is connected to the processor 2310 and transmit and/or receive RF signals. The processor can control the transceiver in order to start communication or to transmit RF signals including various types of information or data such as voice communication data. The transceiver includes a transmitter and a receiver for transmitting and receiving RF signals. The antenna 2340 can facilitate transmission and reception of RF signals. In some implementation examples, when the transceiver receives an RF signal, the transceiver can forward and convert the signal into a baseband frequency for processing performed by the processor. The signal can be processed through various techniques such as converting into audible or readable information to be output through the speaker 2345. The transceiver in FIG. 25 may be the transceivers 106 and 206 in FIG. 26.

Although not shown in FIG. 25, various components such as a camera and a universal serial bus (USB) port may be additionally included in the UE. For example, the camera may be connected to the processor 2310.

FIG. 25 is an example of implementation with respect to the UE and implementation examples of the present disclosure are not limited thereto. The UE need not essentially include all the components shown in FIG. 25. That is, some of the components, for example, the keypad 2320, the GPS chip 2360, the sensor 2365 and the SIM card 2325 may not be essential components. In this case, they may not be included in the UE.

FIG. 26 shows another example of a wireless device.

Referring to FIG. 26, the wireless device may include at least one processor 102 and 202, at least one memory 104 and 204, at least one transceiver 106 and 206 and one or more antennas 108 and 208.

The example of the wireless device described in FIG. 26 is different from the example of the wireless device described in FIG. 22 in that the processors 102 and 202 and the memories 104 and 204 are separated in FIG. 22 whereas the memories 104 and 204 are included in the processors 102 and 202 in the example of FIG. 26. That is, the processor and the memory may constitute one chipset.

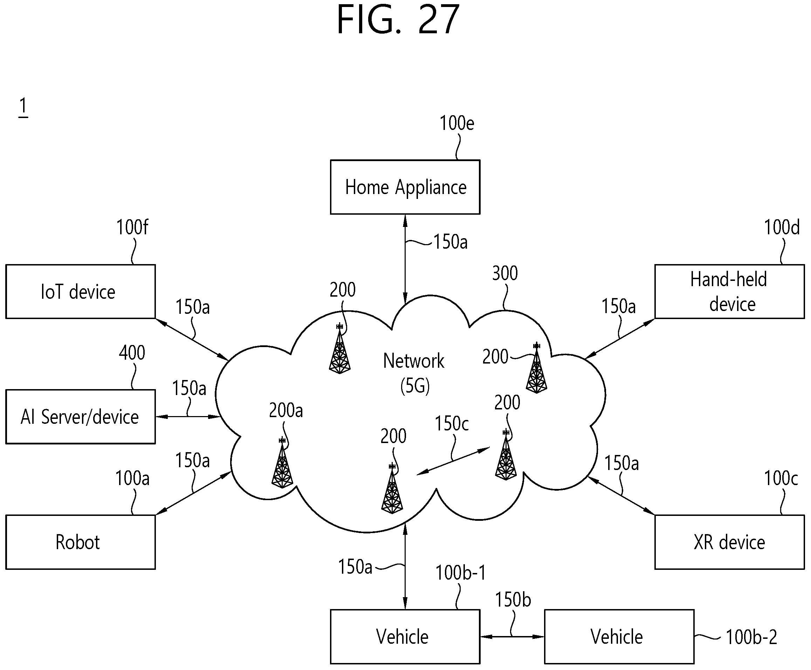

FIG. 27 illustrates a communication system 1 applied to the present specification.

Referring to FIG. 27, a communication system 1 applied to the present specification includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). In addition, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication(e.g. relay, Integrated Access Backhaul(IAB)). The wireless devices and the BSs/the wireless devices may transmit/receive radio signals to/from each other through the wireless communication/connections 150a, 150b or 150c. For example, the wireless communication/connections 150a, 150b or 150c may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Meanwhile, the NR supports multiple numerologies (or subcarrier spacing (SCS)) for supporting diverse 5G services. For example, if the SCS is 15kHz, a wide area of the conventional cellular bands may be supported. If the SCS is 30kHz/60kHz, a dense-urban, lower latency, and wider carrier bandwidth is supported. If the SCS is 60kHz or higher, a bandwidth greater than 24.25GHz is used in order to overcome phase noise.

An NR frequency band may be defined as a frequency range of two types (FR1, FR2). Values of the frequency range may be changed. For example, the frequency range of the two types (FR1, FR2) may be as shown below in Table 7. For convenience of explanation, among the frequency ranges that are used in an NR system, FR1 may mean a "sub 6GHz range", and FR2 may mean an "above 6GHz range" and may also be referred to as a millimeter wave (mmW).

[Table 7]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, as shown in Table 8 below, FR1 may include a band in the range of 410MHz to 7125MHz. That is, FR1 may include a frequency band of at least 6GHz (or 5850, 5900, 5925 MHz, and so on). For example, a frequency band of at least 6GHz (or 5850, 5900, 5925 MHz, and so on) included in FR1 may include an unlicensed band. The unlicensed band may be used for diverse purposes, e.g., the unlicensed band for vehicle-specific communication (e.g., automated driving).

[Table 8]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

**Claims**

1. A method, comprising:

   receiving MCS (modulation and coding scheme) information indicating an MCS index;
   determining, based on the MCS information, a modulation order applied to a specific resource; and
   transmitting a data channel by applying the determined modulation order,
   wherein, based on the specific resource being an HD (half duplex) resource, a first modulation order is determined as a modulation order applied to the HD resource, and
   wherein, based on the specific resource being an FD (full duplex) resource, a second modulation order is determined as a modulation order for the FD resource, and
   wherein the first modulation order and the second modulation order are different from each other.

2. The method of claim 1, wherein the MCS information is received through downlink control information (DCI).

3. The method of claim 1, wherein the first modulation order is determined based on the MCS index, and the second modulation order is determined based on the MCS index and additional information.

4. The method of claim 3, wherein the additional information is a value corresponding to a ratio of the HD resources among total resources of the data channel.

5. The method of claim 3, wherein the additional information is a value multiplied by the first modulation order to obtain the second modulation order, and is configured from a network.

6. The method of claim 3, wherein the additional information is a value added to the first modulation order to obtain the second modulation order, and is configured from the network.

7. The method of claim 1, wherein the MCS information independently indicates a first MCS index for the HD resources and a second MCS index for the FD resources.

8. The method of claim 1, further comprising determining, based on the first modulation order and the second modulation order, a transport block size (TBS) of a transport block transmitted through the data channel.

9. The method of claim 8, wherein a modulation order used for determining the TBS is determined based on the first modulation order, the second modulation order, and a value corresponding to a ratio of the HD resources among total resources of the data channel.

10. The method of claim 1, wherein the data channel is a physical uplink shared channel (PUSCH).

11. A user equipment (UE), comprising:

   at least one transceiver;
   at least one memory; and
   at least one processor operably coupled to the at least one memory and the at least one transceiver,
   wherein the at least one memory stores instructions that, based on being executed by the at least one processor, cause the at least one processor to perform operations comprising:

      receiving MCS (modulation and coding scheme) information indicating an MCS index;
      determining, based on the MCS information, a modulation order applied to a specific resource; and
      transmitting a data channel by applying the determined modulation order,
      wherein, based on the specific resource being an HD (half duplex) resource, a first modulation order is determined as a modulation order applied to the HD resource, and

wherein, based on the specific resource being an FD (full duplex) resource, a second modulation order is determined as a modulation order for the FD resource, and

wherein the first modulation order and the second modulation order are different from each other.

12. An apparatus, comprising:

at least one memory; and
at least one processor operably coupled with the at least one memory,
wherein the at least one memory stores instructions that, based on being executed by the at least one processor, cause the at least one processor to perform operations comprising:

receiving MCS (modulation and coding scheme) information indicating an MCS index;
determining, based on the MCS information, a modulation order applied to a specific resource; and
transmitting a data channel by applying the determined modulation order,
wherein, based on the specific resource being an HD (half duplex) resource, a first modulation order is determined as a modulation order applied to the HD resource, and
wherein, based on the specific resource being an FD (full duplex) resource, a second modulation order is determined as a modulation order for the FD resource, and
wherein the first modulation order and the second modulation order are different from each other.

13. A computer-readable medium (CRM) comprising instructions that, based on being executed by at least one processor, cause the at least one processor to perform operations comprising:

receiving MCS (modulation and coding scheme) information indicating an MCS index;
determining, based on the MCS information, a modulation order applied to a specific resource; and
transmitting a data channel by applying the determined modulation order,
wherein, based on the specific resource being an HD (half duplex) resource, a first modulation order is determined as a modulation order applied to the HD resource, and
wherein, based on the specific resource being an FD (full duplex) resource, a second modulation order is determined as a modulation order for the FD resource, and
wherein the first modulation order and the second modulation order are different from each other.

14. A method, comprising:

transmitting, to a user equipment (UE), MCS (modulation and coding scheme) information indicating an MCS index; and
receiving, in a specific resource, a data channel to which a modulation order based on the MCS information is applied,
wherein, based on the specific resource being an HD (half duplex) resource, a first modulation order is determined as a modulation order applied to the HD resource, and
wherein, based on the specific resource being an FD (full duplex) resource, a second modulation order is determined as a modulation order for the FD resource, and
wherein the first modulation order and the second modulation order are different from each other.

15. A base station, comprising:

at least one transceiver;
at least one memory; and
at least one processor operably coupled with the at least one memory and the at least one transceiver,
wherein the at least one memory stores instructions that, based on being executed by the at least one processor, cause the at least one processor to perform operations comprising:

transmitting, to a user equipment (UE), MCS (modulation and coding scheme) information indicating an MCS index; and
receiving, in a specific resource, a data channel to which a modulation order based on the MCS information is applied,
wherein, based on the specific resource being an HD (half duplex) resource, a first modulation order is determined as a modulation order applied to the HD resource, and

wherein, based on the specific resource being an FD (full duplex) resource, a second modulation order is determined as a modulation order for the FD resource, and

wherein the first modulation order and the second modulation order are different from each other.

# FIG. 1

# FIG. 2

# FIG. 3

# FIG. 4

# FIG. 5

**gNB**
- RRM between cells
- RB control
- Connection mobility control
- Wireless access control
- Measurement setting and provision
- Dynamic resource allocation (scheduler)

NG-RAN

**AMF**
- NAS security
- Idle state mobility processing

**UPF**
- Mobility anchoring
- PDU processing

**SMF**
- UE IP address allocation
- PDU session control

Internet

5GC

# FIG. 6

| | One Frame (10ms) | |
|---|---|---|

· · ·   Half-Frame (5ms)   |   Half-Frame (5ms)   · · ·

· · ·   Subframe 0 (1ms)   · · ·   Subframe 4 (1ms)   |   Subframe 5 (1ms)   · · ·   Subframe 9 (1ms)   · · ·

Subframe (1ms)

**15KHz**

| Slot 0 (14symbols) |
|---|

1ms

**30KHz**

| Slot 0 (14symbols) | Slot 1 |
|---|---|

500us

**60KHz**

| Slot 0 (14symbols) | Slot 1 | Slot 2 | Slot 3 |
|---|---|---|---|

250us

**120KHz**

| Slot 0 (14symbols) | Slot 1 | Slot 2 | Slot 3 | Slot 4 | Slot 5 | Slot 6 | Slot 7 |
|---|---|---|---|---|---|---|---|

125us

# FIG. 7

Resource grid

1RB=12 subcarriers

A BWP

A carrier

1 RE

1subcarrier

1 symbol

k=0

l=0 · · ·

# FIG. 8

CCE #2   CCE #n

$N^{CORESET}_{RB}$ resource blocks

CCE #1

1, 2 or 3 OFDM symbols

# FIG. 9

Downlink only, or Uplink only

One TTI

DL Control channel    UL Control channel

# FIG. 10

DL only

UL only

DL control

UL control

Mixed UL-DL

Slot

⊠ : DL    ⧄ : UL

# FIG. 11

| Initial cell search | system information reception | random access procedure | | | | general DL/UL Tx/Rx | |
|---|---|---|---|---|---|---|---|

P/S-SCH & [DLRS] & PBCH

PDCCH/ PDSCH (BCCH)

PRACH

PDCCH/ PDSCH

PUSCH

PDCCH/ PDSCH

PDCCH/ PDSCH

PUSCH/ PUCCH

S11    S12    S13    S14    S15    S16    S17    S18

• DL/UL ACK/NACK

• UE CQI/PMI/Rank report using PUSCH and/or PUCCH

# FIG. 12

PUSCH repetition type A

# FIG. 13

(a)

(b)

# FIG. 14

(a)

DL    UL

Frequency

Carrier #0
Subband-wise Full Duplex

(b)

DL    UL

Frequency

Carrier #0
Spectrum-Sharing Full Duplex

# FIG. 15

(a)

(b)

# FIG. 16

A: First time resource
B: Second time resource

(a)

(b)

# FIG. 17

A: First time resource
B: Second time resource

(a)

(b)

# FIG. 18

(a)

(b)

# FIG. 19

□ : HD resource          ▦ : FD resource

(a)

□ : HD resource          ▦ : FD resource

(b)

# FIG. 20

| receiving MCS (modulation and coding scheme) information indicating an MCS index | S201 |

determining a modulation order applied to a specific resource based on the MCS information, and wherein, based on the specific resource being an HD (half duplex) resource, a first modulation order is determined as a modulation order applied to the HD resource, and wherein, based on the specific resource being an FD (full duplex) resource, a second modulation order is determined as a modulation order for the FD resource, and wherein the first modulation order and the second modulation order are different from each other — S202

transmitting the data channel by applying the determined modulation order — S203

# FIG. 21

EP 4 787 746 A1

```
   BS                                                          UE

        MCS information indicating an MCS index
        ───────────────────────────────────────────►      ⌐ S211

                          determining a first modulation order
                          for HD resources and a second          ⌐ S212
                          modulation order for FD resources

        transmitting a PUSCH by applying
        the first modulation order in HD resources
        ◄───────────────────────────────────────────      ⌐ S213

        transmitting the PUSCH by applying
        the second modulation order in FD resources
        ◄───────────────────────────────────────────      ⌐ S214
```

# FIG. 22

First Device 100

Processor(s) 102
Transceiver(s) 106
Memory(s) 104

Second Device 200

Transceiver(s) 206
Processor(s) 202
Memory(s) 204

108    208

EP 4 787 746 A1

# FIG. 23

```
codewords                              layers                              antenna ports
             301          302            303          304        305             306
          ┌──────────┐ ┌──────────┐              ┌──────────┐ ┌──────────┐ ┌──────────┐
      ───▶│ Scrambler│▶│ Modulator│──▶┌────────┐ │          │▶│ Resource │▶│  Signal  │──▶
          └──────────┘ └──────────┘   │  Layer │ │  Antenna │ │Block Mapper│ │Generator │
                                      │ Mapper │▶│Port Mapper│    ⋯           ⋯
          ┌──────────┐ ┌──────────┐   │        │ │          │ ┌──────────┐ ┌──────────┐
      ───▶│ Scrambler│▶│ Modulator│──▶└────────┘ │          │▶│ Resource │▶│  Signal  │──▶
          └──────────┘ └──────────┘              └──────────┘ │Block Mapper│ │Generator │
             301          302                         304     └──────────┘ └──────────┘
                                                                   305          306
```

# FIG. 24

EP 4 787 746 A1

codewords

layers

| 401 | 402 | 403 | 404 | 405 | 406 |

Scrambler → Modulator → Layer Mapper → Precoder → Resource Block Mapper → Signal Generator →

Scrambler → Modulator → Resource Block Mapper → Signal Generator →

401    402    405    406

# FIG. 25

# FIG. 26

108, 208

Processor(s)
(102, 202)

Memory(s)
(104, 204)

Transceiver(s)
(106, 206)

# FIG. 27

## INTERNATIONAL SEARCH REPORT

| International application No. |
| --- |
| **PCT/KR2024/014591** |

| A. | CLASSIFICATION OF SUBJECT MATTER |
| --- | --- |
| | **H04L 1/00**(2006.01)i |

According to International Patent Classification (IPC) or to both national classification and IPC

| B. | FIELDS SEARCHED |
| --- | --- |

Minimum documentation searched (classification system followed by classification symbols)

H04L 1/00(2006.01); H04L 1/18(2006.01); H04L 5/00(2006.01); H04L 5/14(2006.01); H04L 5/16(2006.01); H04W 52/04(2009.01); H04W 72/04(2009.01); H04W 72/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: MCS(modulation and coding scheme), HD(half duplex), FD(full duplex), 변조 차수 (modulation order)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2020-0122147 A (SAMSUNG ELECTRONICS CO., LTD.) 27 October 2020 (2020-10-27) See paragraphs [0181] and [0256]-[0259]; and claims 8 and 11-12. | 1-15 |
| Y | KR 10-2019-0126152 A (TELEFONAKTIEBOLAGET LM ERICSSON (PUBL)) 08 November 2019 (2019-11-08) See claims 1-5. | 1-15 |
| A | KR 10-2023-0007340 A (LG ELECTRONICS INC.) 12 January 2023 (2023-01-12) See paragraphs [0008]-[0021]. | 1-15 |
| A | US 2023-0141998 A1 (QUALCOMM INCORPORATED) 11 May 2023 (2023-05-11) See paragraphs [0008]-[0019]. | 1-15 |
| A | EP 3322118 A1 (HUAWEI TECHNOLOGIES CO., LTD.) 16 May 2018 (2018-05-16) See claims 1-16. | 1-15 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **30 December 2024** | **30 December 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 787 746 A1

| INTERNATIONAL SEARCH REPORT | International application No. |
|---|---|
| Information on patent family members | PCT/KR2024/014591 |

| Patent document cited in search report | | | Publication date (day/month/year) | Patent family member(s) | | | Publication date (day/month/year) |
|---|---|---|---|---|---|---|---|
| KR | 10-2020-0122147 | A | 27 October 2020 | EP | 3927068 | A1 | 22 December 2021 |
| | | | | US | 2022-0200777 | A1 | 23 June 2022 |
| | | | | WO | 2020-213877 | A1 | 22 October 2020 |
| KR | 10-2019-0126152 | A | 08 November 2019 | CN | 110431777 | A | 08 November 2019 |
| | | | | EP | 3602865 | A1 | 05 February 2020 |
| | | | | EP | 3771122 | A1 | 27 January 2021 |
| | | | | EP | 4191912 | A1 | 07 June 2023 |
| | | | | JP | 2020-515146 | A | 21 May 2020 |
| | | | | US | 2019-0149287 | A1 | 16 May 2019 |
| | | | | US | 2020-0067666 | A1 | 27 February 2020 |
| | | | | US | 2022-0255691 | A1 | 11 August 2022 |
| | | | | WO | 2018-172939 | A1 | 27 September 2018 |
| KR | 10-2023-0007340 | A | 12 January 2023 | US | 2023-0188245 | A1 | 15 June 2023 |
| | | | | WO | 2021-225197 | A1 | 11 November 2021 |
| US | 2023-0141998 | A1 | 11 May 2023 | CN | 118176683 | A | 11 June 2024 |
| | | | | EP | 4430777 | A1 | 18 September 2024 |
| | | | | WO | 2023-086769 | A1 | 19 May 2023 |
| EP | 3322118 | A1 | 16 May 2018 | CN | 107113156 | A | 29 August 2017 |
| | | | | EP | 3322118 | B1 | 13 May 2020 |
| | | | | US | 2019-0357149 | A1 | 21 November 2019 |
| | | | | WO | 2017-024441 | A1 | 16 February 2017 |

Form PCT/ISA/210 (patent family annex) (July 2022)